(19) **Europäisches Patentamt / European Patent Office / Office européen des brevets**

(11) **EP 4 150 853 B1**

(12) **FASCICULE DE BREVET EUROPEEN**

(45) Date de publication et mention de la délivrance du brevet:
**03.12.2025 Bulletin 2025/49**

(21) Numéro de dépôt: **21755798.2**

(22) Date de dépôt: **14.05.2021**

(51) Classification Internationale des Brevets (IPC):
**H04L 9/00** *(2022.01)* **H04L 9/30** *(2006.01)*
**G06F 7/76** *(2006.01)*

(52) Classification Coopérative des Brevets (CPC):
**H04L 9/008; H04L 9/3093;** H04L 2209/16;
H04L 2209/46

(86) Numéro de dépôt international:
**PCT/FR2021/000049**

(87) Numéro de publication internationale:
**WO 2021/229156 (18.11.2021 Gazette 2021/46)**

(54) **PROCÉDÉ, SYSTÈMES ET SERVICES CRYPTOGRAPHIQUES D'ÉVALUATION DE FONCTIONS UNIVARIÉES OU MULTIVARIÉES À VALEURS RÉELLES SUR DES DONNÉES CHIFFRÉES**

KRYPTOGRAPHISCHES VERFAHREN, SYSTEME UND DIENSTE ZUR BEWERTUNG UNIVARIATER ODER MULTIVARIATER REALWERTFUNKTIONEN AUF VERSCHLÜSSELTEN DATEN

CRYPTOGRAPHIC METHOD, SYSTEMS AND SERVICES FOR EVALUATING UNIVARIATE OR MULTIVARIATE REAL-VALUED FUNCTIONS ON ENCRYPTED DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2020 FR 2004772**

(43) Date de publication de la demande:
**22.03.2023 Bulletin 2023/12**

(60) Demande divisionnaire:
**25200202.7 / 4 636 571**
**25200207.6 / 4 636 572**

(73) Titulaire: **Zama SAS**
**75002 Paris (FR)**

(72) Inventeurs:
• **PAILLIER, Pascal Gilbert Yves**
**75002 Paris (FR)**
• **JOYE, Marc François C.**
**75002 Paris (FR)**

(74) Mandataire: **DeltaPatents B.V.**
**Fellenoord 370**
**5611 ZL Eindhoven (NL)**

(56) Documents cités:
• **CRAIG GENTRY: "41 stAnnual ACM Symposium on Theory of Computing", 2009, ACM PRESS, article "Fully homomorphic encryption using idéal lattices", pages: 169 - 178, XP002802319**
• **DAVID A. SPRECHER: "On the structure of continuous functions of several variables", TRANSACTIONS OF THE AMERICAN MATHEMATICAL SOCIETY, vol. 115, 1965, pages 340 - 355, XP002802325**
• **ALLAN PINKUS: "Surface Fitting and Multiresolution Methods", 1997, VANDERBILT UNIVERSITY PRESS, article "Approximating by ridge functions", pages: 279 - 292, XP002802326**
• **FLORIAN BOURSEMICHELE MINELLIMATTHIAS MINIHOLDPASCAL PAILLIER: "Advances in Cryptology - CRYPTO 2018, Part III", vol. 10993, 2018, SPRINGER, article "Fast homomorphic évaluation of deep discretized neural networks", pages: 483 - 512, XP002802327**

## Description

### Domaine de l'invention

L'invention concerne l'amélioration de l'évaluation homomorphe d'une ou plusieurs fonctions appliquées sur des données préalablement chiffrées. Ce domaine technique, basé sur des travaux récents de cryptologie, comporte potentiellement des applications nombreuses dans tous les secteurs d'activité où il existe des contraintes de confidentialité (telles que, non exclusivement, celles de la protection de la vie privée, celles des secrets d'affaires, ou celles des données médicales).

L'invention concerne plus particulièrement les procédés pour permettre la réalisation automatisée, par un ou plusieurs systèmes informatiques spécifiquement programmés, des calculs nécessaires à l'évaluation homomorphe d'une ou plusieurs fonctions. Il est donc nécessaire de tenir compte des capacités limitées de stockage et de temps de calcul, ou encore - dans le cas d'un traitement à distance type *cloud computing* - de capacités de transmission que peuvent connaître les systèmes de traitement de l'information devant effectuer ce type d'évaluation.

Comme il va être décrit plus bas, le développement des procédés de chiffrement homomorphe est jusqu'à présent fortement freiné par de telles contraintes techniques liées aux capacités de traitement par les ordinateurs et inhérentes à la plupart des schémas proposés par la littérature, notamment au niveau des ressources machine à mettre en œuvre et des temps de calcul à supporter pour réaliser les différentes phases de calcul.

### État de la technique

Un schéma de chiffrement complètement homomorphe *(Fully Homomorphic Encryption,* en abrégé FHE) permet à tout participant de transformer de façon publique un ensemble de chiffrés (correspondant à des clairs $x_1, ..., x_p$) en un chiffré correspondant à une certaine fonction $f(x_1, ..., x_p)$ des clairs, sans que ce participant n'ait accès aux clairs eux-mêmes. Il est bien connu qu'un tel schéma peut servir à construire des protocoles respectant la vie privée *(privacy preserving)* : un utilisateur peut stocker des données chiffrées sur un serveur, et autoriser un tiers à effectuer des opérations sur les données chiffrées, sans avoir à révéler les données elles-mêmes au serveur.

Le premier schéma de chiffrement complètement homomorphe n'a été proposé qu'en 2009 par Gentry (qui a obtenu le brevet no. US8630422B2 en 2014 sur la base d'un premier dépôt de 2009) ; voir aussi [Craig Gentry, "Fully homomorphic encryption using ideal lattices", in 41st Annual ACM Symposium on Theory of Computing, pages 169-178, ACM Press, 2009]. La construction de Gentry n'est pas utilisée de nos jours, mais une des fonctionnalités qu'il a introduite, le «bootstrapping», et en particulier une de ses mises en œuvre, est largement employée dans les schémas qui ont été proposés par la suite. Le bootstrapping est une technique utilisée pour réduire le bruit des chiffrés : en effet, dans tous les schémas FHE connus, les chiffrés contiennent une petite quantité de bruit aléatoire, nécessaire pour des raisons de sécurité. Quand on réalise des opérations sur les chiffrés bruités, le bruit augmente. Après avoir évalué un certain nombre d'opérations, ce bruit devient trop grand et risque de compromettre le résultat des calculs. Le bootstrapping est par conséquent fondamental pour la construction des schémas de chiffrement homomorphe, mais cette technique est très coûteuse, qu'il s'agisse de la mémoire utilisée ou du temps de calcul.

Les travaux qui ont suivi la publication de Gentry ont eu comme objectif de proposer de nouveaux schémas et d'améliorer le bootstrapping pour rendre le chiffrement homomorphe faisable en pratique. Les constructions les plus célèbres sont DGHV [Marten van Dijk, Craig Gentry, Shai Halevi et Vinod Vaikuntanathan, "Fully homomorphic encryption over the integers", in Advances in Cryptology - EUROCRYPT 2010, volume 6110 de Lecture Notes in Computer Science, pages 24-43, Springer, 2010], BGV [Zvika Brakerski, Craig Gentry, et Vinod Vaikuntanathan, "(Leveled) fully homomorphic encryption without bootstrapping", in ITCS 2012: 3rd Innovations in Theoretical Computer Science, pages 309-325, ACM Press, 2012], GSW [Craig Gentry, Amit Sahai et Brent Waters, "Homomorphic encryption from learning with errors: Conceptually simpler, asymptotically faster, attribute-based", in Advances in Cryptology - CRYPTO 2013, Part I, volume 8042 de Lecture Notes in Computer Science, pages 75-92, Springer, 2013] et leurs variantes. Si l'exécution d'un bootstrapping dans le premier schéma de Gentry n'était pas réalisable en pratique (une vie n'aurait pas suffi pour terminer les calculs), les constructions proposées successivement ont rendu cette opération réalisable, bien que peu pratique (chaque bootstrapping durant quelques minutes). Un bootstrapping plus rapide, exécuté sur un schéma de type GSW, a été proposé en 2015 par Ducas et Micciancio [Léo Ducas et Daniele Micciancio, "FHEW: Bootstrapping homomorphic encryption in less than a second", in Advances in Cryptology - EUROCRYPT 2015, Part I, volume 9056 de Lecture Notes in Computer Science, pages 617-640, Springer, 2015] : l'opération de bootstrapping est réalisée en un peu plus d'une demi-seconde. En 2016, Chillotti, Gama, Georgieva et Izabachène ont proposé une nouvelle variante de schéma FHE, appelée TFHE [Ilaria Chillotti, Nicolas Gama, Mariya Georgieva et Malika Izabachène, "Faster fully homomorphic encryption: Bootstrapping in less than 0.1 seconds", in Advances in Cryptology - ASIACRYPT 2016, Part I, volume 10031 de Lecture Notes in Computer Science, pages 3-33, Springer, 2016]. Leur technique de bootstrapping a servi de base dans des travaux ultérieurs. On note les travaux de Bourse *et al.* [Florian Bourse, Michele Minelli, Matthias Minihold et Pascal Paillier, "Fast homomorphic evaluation of deep discretized neural networks", in Advances in Cryptology - CRYPTO 2018, Part III, volume 10993 de Lecture Notes in Computer Science, pages 483-512, Springer, 2018], Carpov *et al.* [Sergiu Carpov, Malika Izabachène et Victor Mollimard, "New techniques for multi-value input homomorphic evaluation and applications", in Topics in Cryptology - CT-RSA 2019, volume 11405 de Lecture Notes in Computer Science, pages 106-126, Springer, 2019], Boura *et al.* [Christina Boura, Nicolas Gama, Mariya Georgieva et Dimitar Jetchev, "Simulating homomorphic evaluation of deep learning predictions", in Cyber Security Cryptography and Machine Learning (CSCML 2019), volume 11527 de Lecture Notes in Computer Science, pages 212-230, Springer, 2019] et Chillotti *et al.* [Ilaria Chillotti, Nicolas Gama, Mariya Georgieva et Malika Izabachène, "TFHE: Fast fully homomorphic encryption over the torus", Journal of Cryptology, 31(1), pp. 34-91, 2020]. Les performances de TFHE sont remarquables. Elles ont contribué à l'avancement de la recherche dans le domaine et à rendre le chiffrement homomorphe plus pratique. Les nouvelles techniques proposées ont permis de calculer un bootstrapping en quelques millisecondes.

## Problème technique

Malgré les progrès accomplis, les procédures de calcul connues permettant de transformer de façon publique un ensemble de chiffrés (correspondant à des clairs $x_1, ..., x_p$) en un chiffré correspondant à une certaine fonction $f(x_1, ..., x_p)$ des clairs, restent pour l'instant limitées à certaines instances ou restent peu pratiques. Le principal moyen générique actuel consiste en effet à représenter cette fonction sous la forme d'un circuit booléen -composé de portes logiques de type AND, NOT, OR ou XOR, puis à évaluer ce circuit de façon homomorphe, avec en entrée les chiffrés des bits représentant les entrées (en clair) de la fonction f. Une mesure de la complexité du circuit booléen est sa profondeur multiplicative, définie comme le nombre maximal de portes AND successives qu'il faut calculer pour obtenir le résultat du calcul. Pour que le bruit reste maîtrisé lors de ce calcul, il est nécessaire d'effectuer régulièrement des opérations de bootstrapping pendant son déroulement. Comme indiqué plus haut, même avec les techniques les plus récentes, ces opérations de bootstrapping mettent en jeu des calculs complexes et rendent l'ensemble du calcul d'autant plus lent que la profondeur multiplicative est grande. Cette approche n'est viable que pour des fonctions opérant sur des entrées binaires et ayant un circuit booléen simple.

De façon générale, la fonction à évaluer prend en entrée une ou plusieurs variables réelles $x_1, ..., x_p$. Il peut même y avoir plusieurs fonctions $f_1, ..., f_q$ à évaluer sur un ensemble de variables réelles. Il y a donc un intérêt technique et économique majeur à trouver un procédé permettant de réaliser rapidement et sans mobiliser des moyens de calcul trop importants l'opération précitée de transformer de façon publique un ensemble de chiffrés (correspondant à des clairs $x_1, ..., x_p$) en un ensemble de chiffrés correspondant à une pluralité de fonctions à valeur réelle $f_1, ..., f_q$ des clairs. Jusqu'à présent en effet, les avancées théoriques ouvertes par Gentry en 2009 n'ont pas connu de réelles concrétisations, faute de solutions efficaces à ce problème technique. C'est à ce problème que la présente invention apporte une réponse.

## Objet de l'invention

L'invention est définie par les revendications.

La présente demande décrit un ensemble de procédés destinés à être exécutés sous forme numérique par un au moins système de traitement de l'information spécifiquement programmé pour transformer efficacement de façon publique un ensemble de chiffrés (correspondant à des clairs $x_1, ..., x_p$) en un ensemble de chiffrés correspondant à une pluralité de fonctions $f_1, ..., f_q$ des clairs. Ce nouveau procédé transforme les fonctions multivariées $f_1, ..., f_q$ en une forme combinant sommes et compositions de fonctions univariées. De préférence, les valeurs intermédiaires résultant de la transformation des fonctions $f_1, ..., f_q$ sont réutilisées dans l'évaluation. Enfin, chacune des fonctions univariées est de préférence représentée sous forme de tables -et non suivant la représentation habituelle sous forme de circuit booléen.

De façon remarquable, n'importe quelle fonction multivariée définie sur les réels et à valeur réelle est supportée. Les entrées subissent un encodage préalable afin d'assurer la compatibilité avec l'espace natif des messages de l'algorithme de chiffrement sous-jacent. Un décodage peut également être appliqué en sortie, après déchiffrement, vers l'image de la fonction considérée.

L'effet technique de cette invention est significatif puisque les techniques qu'elle met en œuvre, considérées de façon indépendante ou de façon combinée, vont permettre de réaliser une évaluation des résultats d'une pluralité de fonctions $f_1, ..., f_q$ appliquées à des données chiffrées tout en réduisant considérablement la complexité et les temps de calcul nécessaires. Comme cela est décrit ci-dessous, cet allègement provient notamment du fait (i) que les fonctions multivariées à évaluer sont transformées en fonctions univariées plutôt que de travailler directement sur des fonctions de plusieurs variables, *(ii)* que ces fonctions peuvent être décomposées de façon à mutualiser des résultats de calculs intermédiaires plutôt qu'à effectuer des évaluations séparées, et *(iii)* que les fonctions univariées résultantes sont représentées par des tables plutôt que par un circuit booléen.

Lorsqu'une fonction *f* est à plusieurs variables $x_1, ..., x_p$, une méthode selon l'invention est de transformer la fonction *f* comme une combinaison de sommes et compositions de fonctions univariées. Il est à noter que ces deux opérations, somme et composition de fonctions univariées, permettent d'exprimer des transformations affines ou encore des combinaisons linéaires. Par analogie aux réseaux de neurones, on appelle «réseau de fonctions univariées» la représentation à l'issue de la transformation de multivarié vers univarié combinant sommes et compositions de fonctions univariées, lequel réseau sera évalué de façon homomorphe sur une pluralité de valeurs chiffrées. Ladite transformation peut être exacte ou approchée ; on note toutefois qu'une transformation exacte est une transformation approchée sans erreur. En pratique, les réseaux ainsi obtenus ont pour caractéristique d'avoir une faible profondeur en comparaison des circuits booléens implémentant la même fonctionnalité. On utilise alors cette nouvelle représentation de la fonction $f$ pour l'évaluer sur les entrées chiffrées $E(\text{encode}(x_1)), \ldots, E(\text{encode}(x_p))$ où E désigne un algorithme de chiffrement et encode une fonction d'encodage, ce qui permettra de se ramener à des calculs du type $E(\text{encode}(g_j(z_k)))$ pour certaines fonctions univariées $g_j$, à partir d'une entrée de type $E(\text{encode}(z_k))$ où $z_k$ est un résultat intermédiaire. Ces calculs exploitent la propriété homomorphe de l'algorithme de chiffrement.

Lorsqu'un même réseau de fonctions univariées est réutilisé plusieurs fois, il est intéressant de ne pas devoir refaire toutes les phases de calcul. Ainsi selon l'invention, une première étape consiste à pré-calculer ledit réseau de fonctions univariées ; il est ensuite évalué de façon homomorphe sur des données chiffrées dans une étape ultérieure.

Le fait que toute fonction multivariée continue puisse s'écrire comme sommes et compositions de fonctions univariées a été démontré par Kolmogorov en 1957 [Andrey N. Kolmogorov, "On the representation of continuous functions of several variables by superposition of continuous functions of one variable and addition", Dokl. Akad. Nauk SSSR, 114, pp. 953-956, 1957].

Ce résultat est resté longtemps théorique, mais des versions algorithmiques ont été trouvées, notamment par Sprecher qui a proposé un algorithme dans lequel il décrit explicitement la méthode pour construire les fonctions univariées [David A. Sprecher, "On the structure of continuous functions of several variables", Transactions of the American Mathematical Society, 115, pp. 340-355, 1965]. On peut en trouver une description détaillée par exemple dans l'article [Pierre-Emmanuel Leni, Yohan Fougerolle et Frédéric Truchetet, "Théorème de superposition de Kolmogorov et son application à la décomposition de fonctions multivariées", in MajecSTIC '08, 29-31 octobre 2008, Marseille, France, 2008]. Par ailleurs, on remarque que l'hypothèse de continuité de la fonction à décomposer peut être relaxée en considérant une approximation de cette dernière.

Une autre approche possible consiste à approcher la fonction multivariée par une somme de fonctions multivariées particulières appelées fonctions *ridge* [B. F. Logan et L. A. Shepp, "Optimal reconstruction of a function from its projections", Duke Mathematical Jounal, 42(4), pp. 645-659, 1975] selon une terminologie anglo-saxonne. Une fonction *ridge* d'un vecteur de variables réelles x = $(x_1, \ldots, x_p)$ est une fonction appliquée au produit scalaire de ce vecteur de variables avec un vecteur de paramètres réels a = $(a_1, \ldots, a_p)$, c'est-à-dire une fonction du type $g_a(\mathbf{x}) = g(a \cdot x)$ où $g$ est univariée. Comme noté plus haut, un produit scalaire ou de façon équivalente une combinaison linéaire est un cas particulier d'une combinaison de sommes et compositions de fonctions univariées ; la décomposition d'une fonction multivariée sous forme de somme de fonctions *ridge* constitue un exemple de réalisation de transformation de multivarié vers univarié selon l'invention. Il est connu que toute fonction multivariée peut être approchée avec autant de précision que l'on souhaite par une somme de fonctions *ridge* si l'on s'autorise à en augmenter le nombre [Allan Pinkus, "Approximating by ridge functions", in A. Le Méhauté, C. Rabut et L. L. Schumaker (Éds.), Surface Fitting and Multiresolution Methods, pages 279-292, Vanderbilt University Press, 1997]. Ces résultats mathématiques ont donné lieu à une méthode d'optimisation statistique connue sous le nom de *projection pursuit* [Jerome H. Friedman et Werner Stuetzle, "Projection pursuit regression", Journal of the American Statistical Association, 76(376), pp. 817-823, 1981].

L'utilisation de fonctions dites radiales du type $g_a(\mathbf{x}) = g(\| \mathbf{x} - \mathbf{a} \|)$ à la place des fonctions *ridge* est également une possibilité [D. S. Broomhead et David Lowe, "Multivariable functional interpolation and adaptive networks", Complex Systems, 2, pp. 321-355, 1988], et d'autres familles de fonctions de base peuvent être utilisées avec une qualité d'approximation (vitesse de convergence) similaire.

Dans certains cas, une décomposition formelle est possible, sans passer par le théorème de Kolmogorov ou une de ses versions algorithmiques (comme celle de Sprecher), ni par les fonctions *ridge,* radiales, ou leurs variantes. Par exemple, la fonction $g(z_1, z_2) = \max(z_1, z_2)$ (qui sert notamment aux couches dites de «max pooling» utilisées par les réseaux de neurones) peut être décomposée ainsi : $\max(z_1, z_2) = z_2 + (z_1 - z_2)^+$ où $z \mapsto z^+$ correspond à la fonction univariée $z \mapsto \max(z, 0)$.

Étant données des fonctions $f_1, \ldots, f_q$, lorsqu'on les représente chacune par un réseau de fonctions univariées, destiné ensuite à être évalué de façon homomorphe sur des données chiffrées, cette évaluation peut être effectuée de façon optimisée lorsque tout ou partie d'une ou plusieurs de ces fonctions univariées est réutilisée. Ainsi, pour chacune des redondances observées dans l'ensemble des fonctions univariées dudit réseau, une partie des procédures d'évaluation homomorphe de fonction univariée sur une valeur chiffrée n'aura à être effectuée qu'une fois. Sachant que cette évaluation homomorphe de fonction se fait typiquement à la volée et grève en grande partie la vitesse de traitement, la mutualisation des valeurs intermédiaires donne lieu à des gains de performance très significatifs.

On considère trois types d'optimisations possibles :

**Même fonction, même argument**

À nombre de fonctions univariées égal, cette optimisation consiste à privilégier les réseaux de fonctions univariées répétant un maximum de fois les mêmes fonctions univariées appliquées sur les mêmes arguments. En effet, chaque fois que la fonction univariée et l'entrée sur laquelle elle est évaluée sont les mêmes, l'évaluation homomorphe de cette fonction univariée sur cette entrée ne nécessite pas d'être recalculée.

**Fonction différente, même argument**

Cette optimisation s'applique lorsque l'évaluation homomorphe de deux ou plusieurs fonctions univariées sur une même entrée peut se faire essentiellement au prix d'une seule évaluation homomorphe, un mode de réalisation permettant de partager une grande partie du calcul. Un cas de figure similaire a été considéré dans l'article de CT-RSA 2019 précité sous le nom de multi-output version. Un exemple d'une telle réalisation est présenté dans la section «Description détaillée de l'invention». Dans le cas multivarié, cette situation apparaît par exemple dans la décomposition de plusieurs fonctions multivariées sous forme de somme de fonctions ridge ou de fonctions radiales lorsque les coefficients ($a_{ik}$) des décompositions sont fixés.

**Même fonction, arguments différant d'une constante additive non nulle**

Un autre cas de figure qui permet d'accélérer les calculs est lorsqu'une même fonction univariée est évaluée sur des arguments dont la différence est connue. Ceci apparaît par exemple lorsqu'on utilise une décomposition de type Kolmogorov, en particulier la version algorithmique approchée de Sprecher. Dans cette situation, la décomposition fait intervenir des fonctions univariées dites « internes » ; voir en particulier l'application à la fonction interne $\Psi$ dans la section «Description détaillée de l'invention». Le surcoût dans ce dernier cas est minime.

Ces optimisations s'appliquent lorsque plusieurs fonctions $f_1, \ldots, f_q$ doivent être évaluées, mais elles s'appliquent également dans le cas d'une seule fonction à évaluer (q = 1). Dans tous les cas, il est intéressant de produire des réseaux de fonctions univariées présentant non seulement un nombre réduit de fonctions univariées mais également de privilégier des fonctions différentes mais sur des mêmes arguments ou des mêmes fonctions sur des arguments différant d'une constante additive, afin de réduire le coût de leur évaluation. Cette caractéristique est propre aux réseaux de fonctions univariées lorsqu'ils sont évalués homomorphiquement sur des entrées chiffrées.

Que les fonctions faisant objet de l'évaluation selon l'invention soient multivariées et aient fait l'objet des premières étapes présentées ci-dessus, ou qu'il s'agisse de traiter les fonctions nativement univariées, l'invention prévoit de réaliser l'évaluation homomorphe de ces fonctions univariées, et dans une variante avantageuse d'utiliser pour ce faire une représentation sous forme de tables.

L'évaluation homomorphe d'une fonction univariée, ou plus généralement d'une combinaison de fonctions univariées, s'appuie sur des schémas de chiffrement homomorphe.

Introduit par Regev en 2005 [Oded Regev, "On lattices, learning with errors, random linear codes, and cryptography", in 37th Annual ACM Symposium on Theory of Computing, pages 84-93, ACM Press, 2005], le problème LWE (de l'anglais *Learning With Errors)* permet la construction de schémas de chiffrement homomorphe sur de nombreuses structures algébriques. Habituellement, un schéma de chiffrement comporte un algorithme de chiffrement $\varepsilon$ et un algorithme de déchiffrement D tels que si c = $\varepsilon(\mu)$ est le chiffré d'un clair $\mu$ alors D(c) retourne le clair $\mu$. Les algorithmes de chiffrement issus du problème LWE et de ses variantes ont la particularité d'introduire du bruit dans les chiffrés. On parle alors d'espace natif des clairs pour indiquer l'espace des clairs sur lequel l'algorithme de chiffrement est défini et pour lequel le déchiffrement d'un chiffré redonne le clair de départ, au bruit près. On rappelle que pour un algorithme de chiffrement $\varepsilon$ ayant $\mathcal{M}$ comme espace natif des clairs, une fonction d'encodage encode est une fonction qui ramène un élement d'un ensemble arbitraire dans l'ensemble $\mathcal{M}$ ou dans un sous-ensemble de celui-ci ; de préférence, cette fonction est injective. Appliqué au tore $\mathbb{T} = \mathbb{R}/\mathbb{Z}$ des réels modulo 1, comme détaillé dans l'article de Chillotti *et al.* précité (ASIACRYPT 2016), un tel schéma est défini comme suit. Pour un entier positif *n*, la clé de chiffrement est un vecteur ($s_1, \ldots, s_n$) de $\{0,1\}^n$ ; l'espace natif des clairs est $\mathcal{M} = \mathbb{T}$. Le chiffré LWE d'un élément $\mu$ du tore est le vecteur **c** = ($a_1, \ldots, a_n, b$) de $\mathbb{T}^{n+1}$ où, pour $1 \leq j \leq n$, $a_j$ est un élément aléatoire de $\mathbb{T}$ et où $b = \sum_{j=1}^{n} s_j \cdot a_j + \mu + e$ (mod 1) avec e un petit bruit suivant une distribution d'erreur aléatoire sur $\mathbb{R}$ centrée en 0. À partir du chiffré c = ($a_1, \ldots, a_n, b)$, la connaissance de la clé ($s_1, \ldots, s_n$) permet de retrouver

$\mu + e = b - \sum_{j=1}^{n} s_j$ . $a_j$ (mod 1) comme un élément de $\mathbb{T}$. On rappelle que deux éléments du tore peuvent être additionnés mais que leur produit interne n'est pas défini. La notation "·" indique le produit externe entre un entier et un élément du tore.

Dans le même article, les auteurs décrivent également un schéma basé sur le $\mathbb{Z}_N[X]$-module $\mathbb{T}_N[X] = \mathbb{R}_N[X]/\mathbb{Z}_N[X]$ où $\mathbb{R}_N[X]$ et $\mathbb{Z}_N[X]$ sont respectivement les anneaux polynômiaux $\mathbb{R}_N[X] = \mathbb{R}[X]/(X^N + 1)$ et $\mathbb{Z}_N[X] = \mathbb{Z}[X]/(X^N + 1)$. Pour des entiers strictement positifs N et k, la clé de chiffrement est un vecteur $(s_1, \ldots, s_k)$ de $\mathbb{B}_N[X]^k$ avec $\mathbb{B}_N[X] = \mathbb{B}[X]/(X^N + 1)$ où $\mathbb{B} = \{0,1\}$ ; l'espace natif des clairs est $\mathcal{M} = \mathbb{T}_N[X]$. Le chiffré RLWE d'un polynôme $\mu$ de $\mathbb{T}_N[X]$ est le vecteur c = $(a_1, \ldots, a_k, b)$ de $\mathbb{T}_N[X]^{k+1}$ où, pour $1 \leq j \leq k$, $a_j$ est un polynôme aléatoire de $\mathbb{T}_N[X]$ et où $b = \sum_{j=1}^{k} s_j \cdot a_j + \mu + e$ (dans $\mathbb{T}_N[X]$, c'est-à-dire modulo $(X^N + 1, 1)$) avec e un petit bruit suivant une distribution d'erreur aléatoire sur $\mathbb{R}_N[X]$. À partir du chiffré **c** = $(a_1, \ldots, a_k, b)$, la connaissance de la clé $(s_1, \ldots, s_k)$ permet de retrouver $\mu + e = b - \sum_{j=1}^{k} s_j \cdot a_j$ (dans $\mathbb{T}_N[X]$) comme un élément de $\mathbb{T}_N[X]$. La notation "·" indique ici le produit externe sur $\mathbb{T}_N[X]$. Le « R » dans RLWE fait référence au mot *ring*. Ces variantes du problème LWE ont été proposées dans [Damien Stehlé, Ron Steinfeld, Keisuke Tanaka et Keita Xagawa, "Efficient public key encryption based on ideal lattices", in Advances in Cryptology - ASIACRYPT 2009, volume 5912 of Lecture Notes in Computer Science, pages 617-635, Springer, 2009] et [Vadim Lyubashevsky, Chris Peikert et Oded Regev, "On ideal lattices and learning with errors over rings", in Advances in Cryptology - EUROCRYPT 2010, volume 6110 of Lecture Notes in Computer Science, pages 1-23, Springer, 2010.]

Enfin, ce même article d'ASIACRYPT 2016 introduit le produit externe entre un chiffré de type RLWE et un chiffré de type RGSW (pour Gentry-Sahai-Waters et 'R' en référence à *ring)*. On rappelle qu'un algorithme de chiffrement de type RLWE donne lieu à un algorithme de chiffrement de type RGSW. On utilise les notations du paragraphe précédent. Pour un entier $\ell \geq 1$, on note Z une matrice à $(k + 1)\ell$ lignes et k + 1 colonnes sur $\mathbb{T}_N[X]$ dont chacune des lignes est un chiffrement de type RLWE du polynôme 0. Le chiffré RGSW d'un polynôme $\sigma$ de $\mathbb{Z}_N[X]$ est alors donné par la matrice C = Z + $\sigma \cdot$ G où G est une matrice dite «gadget» définie sur $\mathbb{T}_N[X]$ (ayant $(k + 1)\ell$ lignes et k + 1 colonnes) et donnée par G = $g^T \otimes I_{k+1}$ = diag($\mathbf{g}^T, \ldots, \mathbf{g}^T$) où g = $(1/B, \ldots, 1/B^\ell)$ et $I_{k+1}$ est la matrice identité de taille k + 1, pour une certaine base $B \geq 2$. À cette matrice gadget est associée une transformation notée $G^{-1} : \mathbb{T}_N[X]^{k+1} \to \mathbb{Z}_N[X]^{(k+1)\ell}$ telle que pour tout vecteur (ligne) v de polynômes dans $\mathbb{T}_N[X]^{k+1}$ on a G⁻¹(**v**) · G ≈ v et G⁻¹(v) est petit. Le produit externe du chiffré de type RGSW C (du polynôme $\sigma \in \mathbb{Z}_N[X]$) par un chiffré de type RLWE c (du polynôme $\mu \in \mathbb{T}_N[X]$), noté C ⊡ c, est défini comme $C \boxdot \mathbf{c} = G^{-1}(\mathbf{c}) \cdot C \in \mathbb{T}_N[X]^{k+1}$. Le chiffré ainsi obtenu C ⊡ c est un chiffré de type RLWE du polynôme $\sigma \cdot \mu \in \mathbb{T}_N[X]$. Les justifications sont données dans l'article d'ASIACRYPT 2016 précité.

Tels que présentés, les schémas précédents sont des schémas de chiffrement dits symétriques ou à clé privée. Ceci ne constitue en rien une limitation car comme l'a montré Rothblum dans [Ron Rothblum, "Homomorphic encryption: From private-key to public-key", in Theory of Cryptography (TCC 2011), volume 6597 de Lecture Notes in Computer Science, pages 219-234, Springer, 2011], tout schéma de chiffrement à clé privée additivement homomorphe peut être converti en un schéma de chiffrement à clé publique.

Comme rappelé plus haut, le bootstrapping désigne une méthode permettant de réduire l'éventuel bruit présent dans les chiffrés. Dans son article fondateur de STOC 2009 précité, Gentry implémente le boostrapping par la technique communément appelée de nos jours *recryption,* qu'il a introduite. La recryption consiste à évaluer de façon homomorphe un algorithme de déchiffrement dans le domaine chiffré. Dans le domaine clair, l'algorithme de déchiffrement prend en entrée un chiffré C et une clé privée K, et retourne le clair x correspondant. Dans le domaine chiffré, avec un algorithme de chiffrement homomorphe E et une fonction d'encodage encode, l'évaluation dudit algorithme de déchiffrement prend en entrée un chiffré de l'encodé de C et un chiffré de l'encodé de K, E(encode(C)) et E(encode(K)), et donne donc un nouveau chiffré de l'encodé du même clair, E(encode(x)), sous la clé de chiffrement de l'algorithme E. Par conséquent, supposer qu'un chiffré est donné comme la sortie d'un algorithme de chiffrement homomorphe E ne constitue pas une limitation car la technique de recryption permet de se ramener à ce cas.

Le caractère homomorphe des schémas de chiffrement de type LWE et de leurs variantes permet de manipuler les clairs en opérant sur les chiffrés correspondants. Le domaine de définition d'une fonction univariée f à évaluer est discrétisée en plusieurs intervalles pavant son domaine de définition. Chaque intervalle est représenté par une valeur $x_i$ ainsi que par la valeur correspondante de la fonction $f(x_i)$. La fonction f est ainsi tabulée par une série de couples de la forme $(x_i, f(x_i))$. Ce sont ces couples qui sont utilisés pour calculer homomorphiquement un chiffré de f(x), ou d'une valeur approchée, à partir d'un chiffré de x, pour une valeur de x arbitraire dans le domaine de définition de la fonction.

Dans l'invention, au cœur de ce calcul homomorphe se trouve une technique générique nouvelle, combinant bootstrappings et encodages. Plusieurs réalisations sont décrites dans la section «Description détaillée de l'invention » .

La technique d'évaluation homomorphe décrite dans l'article d'ASIACRYPT 2016 précité ainsi que celles introduites dans les travaux ultérieurs précités ne permettent pas l'évaluation homomorphe d'une fonction arbitraire, sur un domaine de définition arbitraire. Tout d'abord, celles-ci se limitent strictement à des fonctions de type univarié. L'art antérieur n'a pas de réponses connues dans le cas multivarié. De plus, dans le cas univarié, l'état de la technique antérieure suppose des conditions sur les valeurs d'entrée ou sur la fonction à évaluer. Parmi ces limitations, on note par exemple des entrées limitées à des valeurs binaires (bits) ou le caractère négacyclique requis de la fonction à évaluer (vérifié par exemple par la fonction « signe » sur le tore). Aucun traitement générique des valeurs en entrée ou en sortie permettant de se ramener à ces cas particuliers n'est décrit dans l'art antérieur pour des fonctions à valeur réelle arbitraires.

À l'inverse, la mise en œuvre de l'invention -tout en permettant le contrôle du bruit en sortie (bootstrapping)- permet l'évaluation homomorphe de fonctions à variables réelles sur des entrées qui sont des chiffrés de type LWE de réels, quels que soient la forme des fonctions ou leur domaine de définition.

## Description détaillée de l'invention

L'invention permet de faire réaliser de manière numérique par un au moins système de traitement de l'information spécifiquement programmé l'évaluation, sur des données chiffrées, d'une ou plusieurs fonctions à une ou plusieurs variables à valeur réelle $f_1, ... , f_q$, chacune des fonctions prenant en entrée une pluralité de variables réelles parmi les variables réelles $x_1, ... , x_p$.

Lorsqu'au moins une desdites fonctions prend en entrée au moins deux variables, un procédé selon l'invention comprend schématiquement trois étapes :

1. une étape dite de pré-calcul consistant à transformer chacune desdites fonctions multivariées en un réseau de fonctions univariées, composé de sommes et de compositions de fonctions univariées à valeur réelle,
2. une étape dite de pré-sélection consistant à identifier dans lesdits réseaux de fonctions univariées précalculés des redondances de différents types et à en sélectionner tout ou partie,
3. une étape dite d'évaluation homomorphe de chacun des réseaux de fonctions univariées précalculés, dans laquelle les redondances sélectionnées à l'étape de pré-sélection sont évaluées de façon optimisée.

S'agissant de la deuxième étape (pré-sélection), la sélection de tout ou partie des redondances est principalement mais non exclusivement guidée par l'objectif d'optimiser le traitement numérique de l'évaluation homomorphe, qu'il s'agisse de gain en termes de temps de calcul ou de raisons de disponibilité telles que les ressources en mémoire pour stocker des valeurs de calculs intermédiaires.

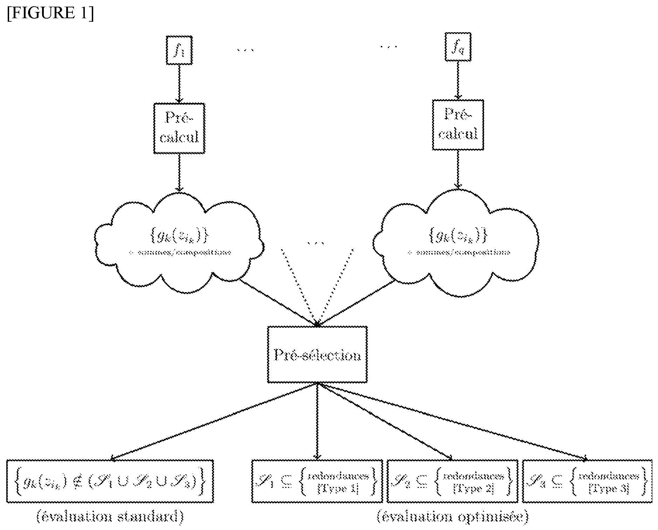

La [FIGURE 1] reprend de façon schématique les deux premières étapes telles qu'elles sont mises en œuvre selon l'invention par un système informatique programmé à cet effet.

Ainsi dans une des réalisations de l'invention, l'évaluation d'une ou plusieurs fonctions multivariées à valeur réelle $f_1, ... , f_q$, chacune des fonctions prenant en entrée une pluralité de variables réelles parmi les variables $x_1, ... , x_p$, et au moins une desdites fonctions prenant en entrée au moins deux variables, prenant en entrée les chiffrés des encodés de chacune des entrées $x_i$, E(encode($x_i$)) avec $1 \le i \le p$, et retournant la pluralité de chiffrés d'encodés de $f_1, ... , f_q$ appliquées à leurs entrées respectives, où E est un algorithme de chiffrement homomorphe et encode est une fonction d'encodage qui associe à chacun des réels $x_i$ un élément de l'espace natif des clairs de E, peut être caractérisée par :

1. une étape de pré-calcul consistant à transformer chacune desdites fonctions multivariées en un réseau de fonctions univariées, composé de sommes et de compositions de fonctions univariées à valeur réelle,

2. une étape de pré-sélection consistant à identifier dans lesdits réseaux de fonctions univariées précalculés les redondances d'un des trois types

    a. mêmes fonctions univariées appliquées à des mêmes arguments,
    b. fonctions univariées différentes appliquées à des mêmes arguments,
    c. mêmes fonctions univariées appliquées à des arguments différant d'une constante additive non nulle, et en sélectionner tout ou partie,

3. une étape d'évaluation homomorphe de chacun des réseaux de fonctions univariées précalculés, dans laquelle les redondances sélectionnées à l'étape de pré-sélection sont évaluées de façon optimisée.

En ce qui concerne l'étape de pré-calcul, une version explicite du théorème de superposition de Kolmogorov permet d'affirmer que toute fonction continue $f : I^p \to \mathbb{R}$, définie sur l'hypercube identité $I^p = [0,1]^p$ de dimension p, peut être écrite comme sommes et compositions de fonctions continues univariées :

$$f(x_1, \dots, x_p) = \sum_{k=0}^{2p} g_k\left(\xi(x_1 + ka, \dots, x_p + ka)\right)$$

avec

$$\xi(x_1 + ka, \dots, x_p + ka) = \sum_{i=1}^{p} \lambda_i \, \Psi(x_i + ka)$$

où, à nombre de variables $p$ donné, les $\lambda_i$ et $a$ sont des constantes, et $\Psi$ est une fonction continue. Autrement dit

$$f(x_1, \dots, x_p) = \sum_{k=0}^{2p} g_k\left(\sum_{i=1}^{p} \lambda_i \, \Psi(x_i + ka)\right).$$

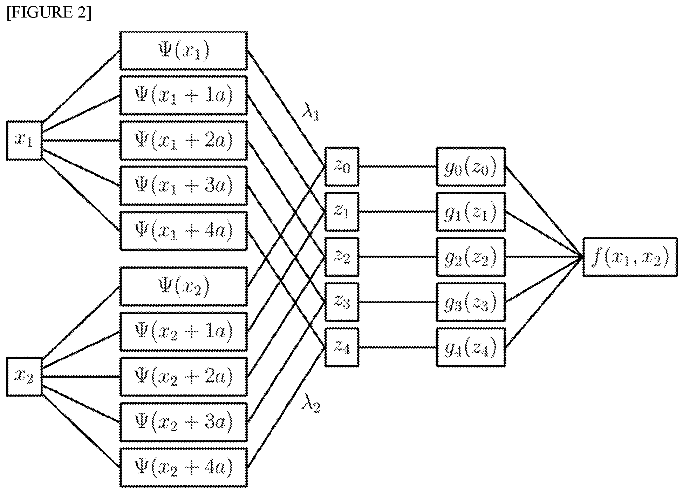

À titre d'exemple, la [FIGURE 2] illustre le cas $p = 2$.

Les fonctions $\Psi$ et $\xi$ sont dites «internes» et sont indépendantes de f pour une arité donnée. La fonction $\Psi$ associe, à toute composante $x_i$ du vecteur réel $(x_1, \dots, x_p)$ de $I^p$, une valeur dans [0,1]. La fonction $\xi$ permet d'associer, à chaque vecteur $(x_1, \dots, x_p) \in I^p$, les nombres $z_k = \sum_{i=1}^{p} \lambda_i \, \Psi(x_i + ka)$ dans l'intervalle [0,1] qui serviront ensuite d'arguments aux fonctions $g_k$ pour reconstituer la fonction f par sommation. On note que la restriction du domaine de f à l'hypercube $I^p$ dans le théorème de Kolmogorov est habituellement faite dans la littérature scientifique pour en simplifier l'exposition. Il est bien évident cependant que ce théorème s'étend naturellement à tout parallélépipède en dimension $p$ par homothétie.

Sprecher a proposé un algorithme pour la détermination des fonctions internes et externes dans [David A. Sprecher, "A numerical implementation of Kolmogorov's superpositions", Neural Networks, 9(5), pp. 765-772, 1996] et [David A. Sprecher, "A numerical implementation of Kolmogorov's superpositions II", Neural Networks, 10(3), pp. 447-457, 1997], respectivement.

Au lieu de la fonction $\Psi$ initialement définie par Sprecher pour construire $\xi$ (qui est discontinue pour certaines valeurs d'entrée), on peut utiliser la fonction $\Psi$ définie dans [Jürgen Braun and Michael Griebel, "On a constructive proof of Kolmogorov's superposition theorem", Constructive Approximation, 30(3), pp. 653-675, 2007].

Une fois les fonctions internes $\Psi$ et $\xi$ fixées, il reste à déterminer les fonctions externes $g_k$ (qui dépendent de la fonction f). Pour cela, Sprecher propose -pour chaque k, $0 \le k \le 2p$- la construction de r fonctions $g_k^r$ dont la somme converge vers la fonction externe $g_k$. À la fin de la $r^{\text{ième}}$ étape, le résultat de l'approximation de f est donné sous la forme suivante :

$$f(x_1, \ldots, x_p) \approx \sum_{k=0}^{K} \sum_{j=1}^{r} g_k^j \circ \xi(x_1 + ka, \ldots, x_p + ka),$$

où $K$ est un paramètre tel que $K \geq 2p$. L'algorithme fournit ainsi un résultat approché par rapport à celui du théorème de décomposition de Kolmogorov. En effet, en prenant $r$ assez grand, et en posant $g_k = \sum_{j=1}^{r} g_k^j$, on obtient la représentation approchée suivante pour la fonction f :

$$f(x_1, \ldots, x_p) \approx \sum_{k=0}^{K} g_k \circ \xi(x_1 + ka, \ldots, x_p + ka),$$

soit encore

$$f(x_1, \ldots, x_p) \approx \sum_{k=0}^{K} g_k \left( \sum_{i=1}^{p} \lambda_i \Psi(x_i + ka) \right).$$

Ainsi dans une des réalisations de l'invention, la phase de pré-calcul peut-être caractérisée en ce que pour au moins une fonction $f_j$ parmi $f_1, \ldots, f_q$, la transformation de l'étape de pré-calcul est une transformation approchée de la forme $f_j(x_{j_1}, \ldots, x_{j_t}) \approx \sum_{k=0}^{K} g_k \left( \sum_{i=1}^{t} \lambda_{j_i} \Psi(x_{j_i} + ka) \right)$ avec $t \leq p$ et $j_1, \ldots, j_t \in \{1, \ldots, p\}$, et où $\Psi$ est une fonction univariée définie sur les réels et à valeur réelle, où les $\lambda_{j_i}$ sont des constantes réelles et où les $g_k$ sont des fonctions univariées définies sur les réels et à valeur réelle, lesdites fonctions $g_k$ étant déterminées en fonction de $f_j$, pour un paramètre $K$ donné.

Une autre technique de décomposition d'une fonction multivariée $f(x_1, \ldots, x_p)$ consiste à l'approcher par une somme de fonctions dites *ridge,* selon la transformation

$$f(x_1, \ldots, x_p) \approx \sum_{k=0}^{K} g_k \left( \sum_{i=1}^{p} a_{i,k} \, x_i \right),$$

où les coefficients $a_{i,k}$ sont des nombres réels et où les $g_k$ sont des fonctions univariées définies sur les réels et à valeur réelle, lesdites fonctions $g_k$ et lesdits coefficients $a_{i,k}$ étant déterminés en fonction de $f_j$, pour un paramètre $K$ donné.

La décomposition est alors approximative dans le cas général, et vise à identifier la meilleure approximation, ou une approximation de qualité suffisante. Cette approche apparaît dans la littérature consacrée à l'optimisation statistique sous le vocable de *projection pursuit.* Comme mentionné précédemment, un résultat notable est que toute fonction f peut être approchée de cette manière avec une précision arbitrairement grande. En pratique cependant, il est courant que f admette une décomposition exacte, c'est-à-dire qu'elle s'exprime analytiquement sous la forme d'une somme de fonctions *ridge* pour tout ou partie de ses entrées.

Lorsqu'une fonction $f_j$ prend en entrée un sous-ensemble de $t$ variables de $\{x_1, \ldots, x_p\}$ avec $t \leq p$, si on note $x_{j_1}, \ldots, x_{j_t}$ ces variables avec $j_1, \ldots, j_t \in \{1, \ldots, p\}$, alors la décomposition *ridge* précédente s'écrit

$$f_j(x_{j_1}, \ldots, x_{j_t}) \approx \sum_{k=0}^{K} g_k \left( \sum_{i=1}^{t} a_{i,k} \, x_{j_i} \right)$$

avec $x = (x_{j_1}, \ldots, x_{j_t})$ et $\mathbf{a_k} = (a_{1,k} \ldots, a_{t,k})$, pour des fonctions $g_k$ et des coefficients $a_{i,k}$ déterminés en fonction de $f_j$, pour un paramètre $K$ donné.

Ainsi dans une des réalisations de l'invention, la phase de pré-calcul peut être caractérisée en ce que pour au moins une fonction $f_j$ parmi $f_1, \ldots, f_q$, la transformation de l'étape de pré-calcul est une transformation approchée de la

forme $f_j(x_{j_1}, \ldots, x_{j_t}) \approx \sum_{k=0}^{K} g_k \left( \sum_{i=1}^{t} a_{i,k}\, x_{j_i} \right)$ avec $t \le p$ et $j_1, \ldots, j_t \in \{1, \ldots, p\}$, et où les coefficients $a_{i,k}$ sont des nombres réels et où les $g_k$ sont des fonctions univariées définies sur les réels et à valeur réelle, lesdites fonctions $g_k$ et lesdits coefficients $a_{i,k}$ étant déterminés en fonction de $f_j$, pour un paramètre $K$ donné.

Une technique de décomposition similaire, utilisant les mêmes outils d'optimisation statistique, s'applique en prenant les fonctions radiales plutôt que les fonctions *ridge,* selon

$$f(x_1, \ldots, x_p) \approx \sum_{k=0}^{K} g_k \left( \| \mathbf{x} - \mathbf{a_k} \| \right)$$

avec $\mathbf{x} = (x_1, \ldots, x_p)$, $\mathbf{a_k} = (a_{1,k}, \ldots, a_{p,k})$, et où les vecteurs $\mathbf{a_k}$ ont pour coefficients $a_{i,k}$ des nombres réels et où les $g_k$ sont des fonctions univariées définies sur les réels et à valeur réelle, lesdites fonctions $g_k$ et lesdits coefficients $a_{i,k}$ étant déterminés en fonction de $f$, pour un paramètre $K$ donné et une norme $\|\cdot\|$ donnée. Habituellement, la norme euclidienne est utilisée. Lorsqu'une fonction $f_j$ prend en entrée un sous-ensemble de $t$ variables de $\{x_1, \ldots, x_p\}$ avec $t \le p$, si on note $x_1, \ldots, x_{j_t}$ ces variables avec $j_1, \ldots, j_t \in \{1, \ldots, p\}$, alors la décomposition précédente s'écrit

$$f_j(x_{j_1}, \ldots, x_{j_t}) \approx \sum_{k=0}^{K} g_k \left( \| \mathbf{x} - \mathbf{a_k} \| \right)$$

avec $\mathbf{x} = (x_{j_1}, \ldots, x_{j_t})$ et $\mathbf{a_k} = (a_{1,k}, \ldots, a_{t,k})$, pour des fonctions $g_k$ et des coefficients $a_{i,k}$ déterminés en fonction de $f_j$, pour un paramètre $K$ donné.

Ainsi dans une des réalisations de l'invention, la phase de pré-calcul peut être caractérisée en ce que pour au moins une fonction $f_j$ parmi $f_1, \ldots, f_q$, la transformation de l'étape de pré-calcul est une transformation approchée de la forme $f_j(x_{j_1}, \ldots, x_{j_t}) \approx \sum_{k=0}^{K} g_k \left( \| \mathbf{x} - \mathbf{a_k} \| \right)$ avec $\mathbf{x} \approx (x_1, \ldots, x_{j_t})$, $\mathbf{a_k} = (a_{1,k}, \ldots, a_{t,k})$, $t \le p$ et $j_1, \ldots, j_t \in \{1, \ldots, p\}$, et où les vecteurs $\mathbf{a_k}$ ont pour coefficients $a_{i,k}$ des nombres réels et où les $g_k$ sont des fonctions univariées définies sur les réels et à valeur réelle, lesdites fonctions $g_k$ et lesdits coefficients $a_{i,k}$ étant déterminés en fonction de $f_j$, pour un paramètre $K$ donné et une norme $\|\cdot\|$ donnée.

Comme indiqué dans l'article de Pinkus précité, une autre classe importante de décomposition de fonctions est lorsque les coefficients $a_{i,k}$ sont fixés, les fonctions $g_k$ sont les variables. Cette classe s'applique aussi bien à la décomposition sous forme de fonctions *ridge* que sous forme de fonctions radiales. Plusieurs méthodes sont connues pour résoudre ce problème, sous le nom de : algorithme de Von Neumann, algorithme *cyclic coordinate,* méthode de décomposition de domaine de Schwarz, algorithme de Diliberto-Straus, ainsi que des variantes que l'on trouve dans la littérature consacrée à la tomographie ; voir ce même article de Pinkus et les références qui y sont données.

Ainsi, dans une des réalisations particulières de l'invention, cette phase de pré-calcul est en outre caractérisée en ce que les coefficients $a_{i,k}$ sont fixés.

Dans certains cas, la transformation de l'étape de pré-calcul peut être effectuée de façon exacte au moyen d'une représentation formelle équivalente de fonctions multivariées.

Soit g une fonction multivariée. Si cette fonction g calcule le maximum de $z_1$ et $z_2$, $g(z_1, z_2) = \max(z_1, z_2)$, elle peut utiliser l'équivalence formelle $\max(z_1, z_2) = z_2 + (z_1 - z_2)^+$, où $z \mapsto z^+$ correspond à la fonction univariée $z \mapsto \max(z, 0)$. L'utilisation de cette équivalence formelle permet d'obtenir aisément d'autres équivalences formelles pour la fonction $\max(z_1, z_2)$ À titre d'exemple, comme $(z_1 - z_2)^+$ peut s'exprimer de façon équivalente comme $(z_1 - z_2)^+ = \frac{1}{2}(z_1 - z_2) + \frac{1}{2}|z_1 - z_2|$, on obtient l'équivalence formelle $\max(z_1, z_2) = (z_1 + z_2 + |z_1 - z_2|)/2$ où $z \mapsto |z|$ est la fonction univariée « valeur absolue » et où $z \mapsto z/2$ est la fonction univariée « division par 2 ».

De manière générale, pour trois variables ou plus $z_1, \ldots, z_m$, étant donné que

$$\max(z_1, \ldots, z_i, z_{i+1}, \ldots, z_m) = \max\big( \max(z_1, \ldots, z_i), \max(z_{i+1}, \ldots, z_m) \big)$$

pour n'importe quel $i$ satisfaisant $1 \le i \le m - 1$, on obtient ainsi $\max(z_1, \ldots, z_m)$ par itération comme une combinaison de sommes et fonctions $|\cdot|$ (valeur absolue) ou $(\cdot)^+$.

Ainsi dans une des réalisations de l'invention, la phase de pré-calcul peut être caractérisée en ce que la transformation de cette étape de pré-calcul utilise l'équivalence formelle $\max(z_1, z_2) = z_2 + (z_1 - z_2)^+$ pour exprimer la

fonction $(z_1, z_2) \mapsto \max(z_1, z_2)$ comme une combinaison de sommes et compositions de fonctions univariées.

Dans une réalisation particulière de l'invention, cette phase de pré-calcul est en outre caractérisée en ce que l'équivalence formelle est obtenue à partir de l'itération de l'équivalence formelle pour deux variables, pour ladite fonction lorsque celle-ci comporte trois variables ou plus.

De la même façon, pour la fonction « minimum », $g(z_1, z_2) = \min(z_1, z_2)$, on peut utiliser l'équivalence formelle $\min(z_1, z_2) = z_2 + (z_1 - z_2)^-$ où $z \mapsto z^- = \min(z, 0)$, ou encore $\min(z_1, z_2) = (z_1 + z_2 - |z_1 - z_2|)/2$ car

$$(z_1 - z_2)^- = \frac{1}{2}(z_1 - z_2) - \frac{1}{2}|z_1 - z_2|$$, ce qui permet de manière générale, en itérant, de décomposer formellement la fonction m-ariée $\min(z_1, \dots , z_m)$ comme une combinaison de sommes et fonctions univariées, en observant que $\min(z_1, \dots , z_i, z_{i+1}, \dots, z_m) = \min(\min(z_1, \dots , z_i), \min(z_{i+1}, \dots , z_m))$.

Ainsi dans une des réalisations de l'invention, la phase de pré-calcul peut être caractérisée en ce que la transformation de cette étape de pré-calcul utilise l'équivalence formelle $\min(z_1, z_2) = z_2 + (z_1 - z_2)^-$ pour exprimer la fonction $(z_1, z_2) \mapsto \min(z_1, z_2)$ comme une combinaison de sommes et compositions de fonctions univariées.

Dans une réalisation particulière de l'invention, cette phase de pré-calcul est en outre caractérisée en ce que l'équivalence formelle est obtenue à partir de l'itération de l'équivalence formelle pour deux variables, pour ladite fonction lorsque celle-ci comporte trois variables ou plus.

Une autre fonction multivariée très utile qui peut être décomposée simplement de façon formelle en une combinaison de sommes et compositions de fonctions univariées est la multiplication. Une première réalisation est d'utiliser pour $g(z_1, z_2) = z_1 \times z_2$ l'équivalence formelle $z_1 \times z_2 = (z_1 + z_2)^2/4 - (z_1 - z_2)^2/4$, faisant intervenir la fonction univariée $z \mapsto z^2/4$. Bien évidemment, l'utilisation d'une équivalence formelle donne d'autres équivalences formelles. Ainsi, à titre d'exemple, en utilisant $z_1 \times z_2 = (z_1 + z_2)^2/4 - (z_1 - z_2)^2/4$, on déduit $z_1 \times z_2 = (z_1 + z_2)^2/4 - (z_1 - z_2)^2/4 + (z_1 + z_2)^2/4 - (z_1 + z_2)^2/4 = (z_1 + z_2)^2/2 - (z_1 - z_2)^2/4 - (z_1 + z_2)^2/4 = (z_1 + z_2)^2/2 - z_1{}^2/2 - z_2{}^2/2$ ; c'est-à-dire l'équivalence formelle $z_1 \times z_2 = (z_1 + z_2)^2/2 - z_1{}^2/2 - z_2{}^2/2$, faisant intervenir la fonction univariée $z \mapsto z^2/2$.

Ainsi dans une des réalisations de l'invention, la phase de pré-calcul peut être caractérisée en ce que la transformation de cette étape de pré-calcul utilise l'équivalence formelle $z_1 \times z_2 = (z_1 + z_2)^2/4 - (z_1 - z_2)^2/4$ pour exprimer la fonction $(z_1, z_2) \mapsto z_1 \times z_2$ comme une combinaison de sommes et compositions de fonctions univariées.

Ces réalisations se généralisent à des fonctions m-ariées pour $m \geq 3$ en observant que $z_1 \times \cdots \times z_i \times z_{i+1} \times \cdots \times z_m = (z_1 \times \cdots \times z_i) \times (z_{i+1} \times \cdots \times z_m)$ avec $1 \leq i \leq m - 1$.

Dans une réalisation particulière de l'invention, cette phase de pré-calcul est en outre caractérisée en ce que l'équivalence formelle est obtenue à partir de l'itération de l'équivalence formelle pour deux variables, pour ladite fonction lorsque celle-ci comporte trois variables ou plus.

Une deuxième réalisation est de décomposer $g(z_1, z_2) = |z_1 \times z_2| = |z_1| \times |z_2|$ comme $|z_1 \times z_2| = \exp(\ln|z_1| + \ln|z_2|)$, faisant intervenir les fonctions univariées $z \mapsto \ln|z|$ et $z \mapsto \exp(z)$ ; ou encore, pour une base arbitraire B, comme $|z_1 \times z_2| = B^{\log_B|z1| + \log_B|z2|}$ car

$$\exp(\ln|z_1| + \ln|z_2|) = \exp\left(\frac{\log_B|z_1|}{\log_B e} + \frac{\log_B|z_1|}{\log_B e}\right) = e^{\frac{1}{\log_B e}(\log_B|z_1| + \log_B|z_2|)} = B^{\log_B|z_1| + \log_B|z_2|}$$ où $e =$

$\exp(1)$, faisant intervenir les fonctions univariées $z \mapsto \log_B|z|$ et $z \mapsto B^z$. Ici encore, ces réalisations se généralisent à des fonctions m-ariées pour $m \geq 3$ en observant que $|z_1 \times \cdots \times z_i \times z_{i+1} \times \cdots \times z_m| = |z_1 \times \cdots \times z_i| \times |z_{i+1} \times \cdots \times z_m|$ avec $1 \leq i \leq m - 1$.

Ainsi dans une des réalisations de l'invention, la phase de pré-calcul peut être caractérisée en ce que la transformation de cette étape de pré-calcul utilise l'équivalence formelle $|z_1 \times z_2| = \exp(\ln|z_1| + \ln|z_2|)$ pour exprimer la fonction $(z_1, z_2) \mapsto |z_1 \times z_2|$ comme une combinaison de sommes et compositions de fonctions univariées.

Dans une réalisation particulière de l'invention, cette phase de pré-calcul est en outre caractérisée en ce que l'équivalence formelle est obtenue à partir de l'itération de l'équivalence formelle pour deux variables, pour ladite fonction lorsque celle-ci comporte trois variables ou plus.

Comme décrit précédemment, la ou les fonctions multivariées données en entrée sont transformées en un réseau de fonctions univariées. Un tel réseau n'est pas nécessairement unique, même dans le cas où la transformation est exacte.

À titre d'exemple, on a vu ci-dessus au moins deux décompositions de la fonction multivariée $\max(x_1, x_2)$, à savoir $\max(x_1, x_2) = x_2 + (x_1 - x_2)^+$ et $\max(x_1, x_2) = (x_1 + x_2 + |x_1 - x_2|)/2$. Spécifiquement, chacune de ces transformations peut procéder de façon détaillée comme suit

1.

$$\max(x_1, x_2) = x_2 + (x_1 - x_2)^+$$

- poser $z_1 = x_1 - x_2$ et définir $g_1(z) = z^+$

- écrire $\max(x_1, x_2) = x_2 + g_1(z_1)$

2.

$$\max(x_1, x_2) = (x_1 + x_2 + |x_1 - x_2|)/2$$

- poser $z_1 = x_1 - x_2$ et $z_2 = x_1 + x_2$

- définir $g_1(z) = |z|$ et $g_2(z) = z/2$

- écrire $\max(x_1, x_2) = g_2(z_3)$ avec $z_3 = z_2 + g_1(z_1)$

De manière générale, on observe deux types d'opérations dans un réseau de fonctions univariées : des sommes et des évaluations de fonctions univariées. Lorsque l'évaluation du réseau se fait de façon homomorphe sur des valeurs chiffrées, les opérations les plus coûteuses sont les évaluations des fonctions univariées car cela engendre typiquement une étape de bootstrapping. Il est par conséquent intéressant de produire des réseaux de fonctions univariées minimisant ces opérations d'évaluation de fonctions univariées.

Dans l'exemple précédent, on voit donc que la première transformation pour la fonction « maximum » [$\max(x_1, x_2) = x_2 + (x_1 - x_2)^+$] semble plus avantageuse car elle ne requiert qu'une seule évaluation de fonction univariée, à savoir celle de la fonction $g_1(z) = z^+$. En pratique, la différence n'est pas notable car la seconde fonction univariée dans la deuxième transformation n'a pas vraiment besoin d'être évaluée : il suffit de retourner $2\max(x_1, x_2) = x_1 + x_2 + |x_1 - x_2|$ ou encore d'intégrer ce facteur dans la fonction de décodage en sortie. De façon générale, les fonctions univariées consistant à multiplier par une constante peuvent être ignorées *(i)* en calculant un multiple de la fonction de départ, ou *(ii)* en 'absorbant' par composition la constante lorsque ces fonctions sont en entrée d'une autre fonction univariée. Par exemple, la fonction multivariée $\sin(\max(x_1, x_2))$ peut s'écrire comme

1.

$$\sin(\max(x_1, x_2)) = \sin(x_2 + (x_1 - x_2)^+)$$

- poser $z_1 = x_1 - x_2$ et définir $g_1(z) = z^+$

- définir $g_2(z) = \sin(z)$

2.

$$\text{écrire } \sin(\max(x_1, x_2)) = g_2(z_2) \text{ avec } z_2 = x_2 + g_1(z_1)$$

- 

$$\sin(\max(x_1, x_2)) = \sin((x_1 + x_2 + |x_1 - x_2|)/2)$$

- 

$$\text{poser } z_1 = x_1 - x_2 \text{ et } z_2 = x_1 + x_2$$

- 

$$\text{définir } g_1(z) = |z| \text{ et } g_2(z) = \sin(z/2)$$

3.

$$\text{écrire } \sin(\max(x_1, x_2)) = g_2(z_3) \text{ avec } z_3 = z_2 + g_1(z_1)$$

(la multiplication par $\frac{1}{2}$ étant « absorbée » par la fonction $g_2(z) = \sin(z/2)$ dans le deuxième cas).

Hormis les fonctions univariées du type *g(z) = z + a* (addition d'une constante *a*) ou du type *g(z) = az* (multiplication par une constante *a*), d'autres cas de figure peuvent donner lieu à des évaluations plus rapides de fonctions univariées.

On note $\{g_k(z_{ik})\}_k$ l'ensemble des fonctions univariées avec leur argument respectif ( $z_{i_k} \in \mathbb{R}$ ), résultant de la transformation de $f_1, \dots, f_q$ à l'étape de pré-calcul -certaines fonctions univariées $g_k$ pouvant être les mêmes.

Trois types d'optimisations sont considérés :

**1) Même fonction, même argument :**

$g_k = g_{k'}$ et $z_{i_k} = z_{i_{k'}}$ (Type 1). Cette optimisation est évidente. Elle consiste à réutiliser des résultats de calculs précédents. Ainsi, s'il existe un *k' < k* tel que $g_{k'}(z_{i_{k'}})$ a déjà été évalué et pour lequel $g_{k'}(z_{i_{k'}}) = g_k(z_{i_k})$, la valeur de $g_k(z_{i_k})$ ne doit pas être recalculée.

**2) Fonction différente, même argument :**

$g_k \neq g_{k'}$ et $z_{i_k} = z_{i_{k'}}$ (Type 2). Dans certains cas, le coût de l'évaluation homomorphe de deux ou plusieurs fonctions univariées sur un même argument peut être moindre que la somme des coûts de ces fonctions prises séparément. Typiquement, une seule étape de bootstrapping est requise. Dans ce cas, entre deux réseaux de fonctions univariées comportant un même nombre de fonctions univariées du type $g_k(z_{i_k})$, aux multiplicités près, il est avantageux de préférer celui partageant un maximum d'arguments. Un exemple illustre bien cette situation. On suppose l'évaluation homomorphe de la fonction multivariée *f(x₁, x₂)* = max(*x₁, x₂*) + |*x₁* × *x₂*|. Deux réalisations possibles de réseaux sont

a.

$$\max(x_1, x_2) + |x_1 \times x_2| = x_2 + (x_1 - x_2)^+ + \exp(\ln|x_1| + \ln|x_2|)$$

- poser $z_1 = x_1 - x_2$ et définir $g_1(z) = z^+$
- définir $g_2(z) = \ln|z|$ et $g_3(z) = \exp(z)$
- 

écrire max(*x₁, x₂*) + |*x₁* × *x₂*| = *x₂* + *g₁(z₁)* + *g₃(z₂)* avec *z₂* = *g₂(x₁)* + *g₂(x₂)*

b.

$$\max(x_1, x_2) + |x_1 \times x_2| = x_2 + (x_1 - x_2)^+ + |(x_1 + x_2)^2/4 - (x_1 - x_2)^2/4|$$

- 

$$\text{poser } z_1 = x_1 - x_2 \text{ et définir } g_1(z) = z^+$$

- 

$$\text{poser } z_2 = x_1 + x_2 \text{ et définir } g_2(z) = z^2/4 \text{ et } g_3(z) = |z|$$

- 

écrire $\max(x_1, x_2) + |x_1 \times x_2| = x_2 + g_1(z_1) + g_3(z_3)$ avec $z_3 = g_2(z_2) - g_2(z_1)$.

Les deux réalisations ci-dessus comptent quatre évaluations de fonctions univariées. La deuxième cependant comporte deux fonctions univariées sur un même argument, à savoir $g_1(z_1)$ et $g_2(z_1)$, et est donc préférée.

La mutualisation des fonctions univariées sur un même argument ne se limite pas aux transformations effectuées au moyen d'une représentation formelle équivalente. Cela s'applique aussi aux transformations numériques. On rappelle qu'une fonction définie sur un parallélépipède de $\mathbb{R}^p$ peut être transformée en un réseau de fonctions univariées. En particulier, pour une fonction $f$ à p variables $x_1, \dots, x_p$, l'algorithme de Sprecher permet d'obtenir une approximation de la fonction f ayant la forme suivante :

$$f(x_1, \dots, x_p) \approx \sum_{k=0}^{K} g_k\left(\xi\left(x_1 + ka, \dots, x_p + ka\right)\right)$$

avec

$$\xi\left(x_1 + ka, \dots, x_p + ka\right) = \sum_{i=1}^{p} \lambda_i \Psi(x_i + ka).$$

Dans cette construction, les fonctions dites "internes" $\Psi$ et $\xi$ ne dépendent pas de f, pour un domaine de définition donné. Par conséquent, si on évalue homomorphiquement plusieurs fonctions multivariées $f_1, \dots, f_q$ définies sur un même domaine, les évaluations homomorphes des fonctions $\Psi$ et $\xi$ n'ont pas besoin d'être recalculées lorsqu'elles s'appliquent sur les mêmes entrées. Ce cas de figure apparaît également par exemple dans la décomposition de plusieurs fonctions multivariées utilisant des fonctions ridge ou des fonctions radiales, lorsque les coefficients $(a_{ik})$ des décompositions sont fixés.

**3) Même fonction, arguments différant d'une constante** additive :

$g_k = g_{k'}$ et $z_{i_k} = z_{i_{k'}} + a_k$ pour une constante connue $a_k \neq 0$ (Type 3). Un autre cas de figure permettant d'accélérer les calculs est lorsqu'une même fonction univariée est appliquée à des arguments différant d'une constante additive. Par exemple, toujours dans la construction de Sprecher, l'évaluation homomorphe de f ci-dessus fait appel à plusieurs évaluations homomorphes de la même fonction univariée $\Psi$ sur des variables différant additivement d'une valeur constante, à savoir $x_i + ka$ pour $1 \leq i \leq p$ et où $ka$ est connu. Dans ce cas, la valeur du chiffrement de $\Psi(x_i + ka)$ pour $1 \leq k \leq K$ peut s'obtenir efficacement à partir du chiffrement de $\Psi(x_i)$ ; un exemple de réalisation est détaillé ci-dessous.

De façon formelle, dans l'ensemble des fonctions univariées avec leur argument respectif, $\{g_k(z_{i_k})\}_k$, résultant de la transformation de $f_1, \dots, f_q$ à l'étape de pré-calcul, on appelle «redondance» un élément $g_k(z_{i_k})$ vérifiant une des trois conditions

1.

$$g_k = g_{k'} \text{ et } z_{i_k} = z_{i_{k'}}$$

2.

$$g_k \neq g_{k'} \text{ et } z_{i_k} = z_{i_{k'}}$$

3.

$$g_k = g_{k'} \text{ et } z_{i_k} = z_{i_{k'}} + a_k$$

pour une constante connue $a_k \neq 0$

pour un indice $k' < k$.

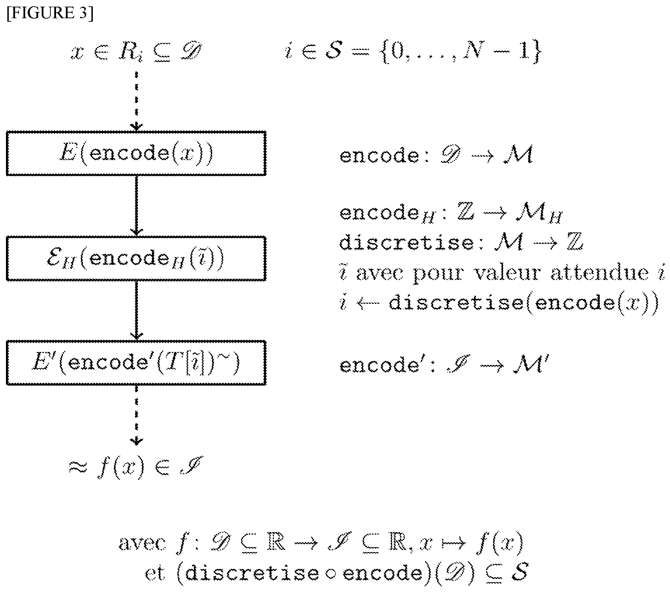

Comme illustré à la [FIGURE 3], dans le cas d'une fonction univariée quelconque f d'une variable réelle de précision arbitraire dans un domaine de définition D et à valeur réelle dans une image $\mathcal{J}$,

$$f: \mathcal{D} \subseteq \mathbb{R} \to \mathcal{J} \subseteq \mathbb{R}, x \mapsto f(x),$$

un procédé selon l'invention utilise deux algorithmes de chiffrement homomorphe, notés E et E'. Leurs espaces natifs des clairs sont respectivement notés $\mathcal{M}$ et $\mathcal{M}'$. Le procédé est paramétré par un entier $N \geq 1$ qui quantifie la précision dite effective des entrées sur laquelle la fonction $f$ est évaluée. En effet, bien que les entrées du domaine de définition $D$ de la fonction f puissent être de précision arbitraire, elles seront représentées en interne par au plus $N$ valeurs choisies. Cela a pour conséquence directe que la fonction $f$ sera représentée par un maximum de $N$ valeurs possibles. Le procédé est également paramétré par des fonctions d'encodage encode et encode', où encode prend en entrée un élément de D et lui associe un élément de $M$ et encode' prend en entrée un élément de $\mathcal{J}$ et lui associe un élément de $\mathcal{M}'$. Le procédé est paramétré par une fonction dite de discrétisation discretise qui prend en entrée un élément de $M$ et lui associe un entier. Les fonctions d'encodage encode et de discrétisation discretise sont telles que l'image du domaine D par l'encodage encode suivi de la discrétisation discretise, (discretise ∘ encode)(D), soit un ensemble d'au plus $N$ indices pris parmi $\mathcal{S}$ = {0, ..., $N$ - 1}. Enfin, le procédé est paramétré par un schéma de chiffrement homomorphe possédant un algorithme de chiffrement $\varepsilon_H$ dont l'espace natif des clairs $\mathcal{M}_H$ est de cardinalité au moins $N$, ainsi que par une fonction d'encodage encode$_H$ qui prend en entrée un entier et retourne un élément de $\mathcal{M}_H$. Dans ce cas, le procédé comprend les étapes suivantes :

- Une étape de pré-calcul dans laquelle on réalise la discrétisation de ladite fonction f et la construction d'une table $T$ correspondant à cette fonction $f$ discrétisée.

    ∘ De façon détaillée, le domaine $D$ de la fonction est décomposé en $N$ sous-intervalles $R_0, ..., R_{N-1}$ dont l'union vaut D. Pour chaque indice i ∈ {0, ... , $N$ - 1}, on sélectionne un représentant x(i) ∈ $R_i$ et on calcule y(i) = $f$(x(i)). On retourne la table $T$ constituée des $N$ composantes $T$[0], ... , $T$[$N$ - 1], avec

$$T[i] = y(i) \text{ pour } 0 \leq i \leq N - 1.$$

- Une étape dite d'évaluation homomorphe de la table dans laquelle, étant donné le chiffré d'un encodé de $x$, E(encode(x)), pour une valeur réelle $x \in \mathcal{D}$ où la fonction encode encode $x$ comme un élément de $\mathcal{M}$, le chiffré E(encode(x)) est converti en le chiffré $\varepsilon_H$(encode$_H$($\tilde{\imath}$)) pour un entier $\tilde{\imath}$ ayant pour valeur attendue l'indice i avec i = (discretise ∘ encode)(x) dans l'ensemble {0, ... , $N$ - 1} si x ∈ $R_i$. À partir du chiffré $\varepsilon_H$(encode$_H$($\tilde{\imath}$)) et de la table T, on obtient le chiffré $E'$(encode'($T[\tilde{\imath}]$)~) pour un élément encode'($T[\tilde{\imath}]$)~ ayant pour valeur attendue encode'($T[i]$) avec $T[i]$ = $y(i)$ et où $y(\tilde{\imath}) \approx f(x)$. On retourne le chiffré $E'$(encode'($T[\tilde{\imath}]$)~) comme le chiffré d'un encodé d'une valeur approchée de $f$ (x).

Ainsi dans une de ses réalisations, l'invention couvre l'évaluation homomorphe approchée, effectuée de manière numérique par un système de traitement de l'information spécifiquement programmé, d'une fonction univariée f d'une variable réelle $x$ de précision arbitraire dans un domaine de définition $D$ et à valeur réelle dans une image I, prenant en entrée le chiffré d'un encodé de x, $E$(encode($x$)), et retournant le chiffré d'un encodé d'une valeur approchée de $f(x)$, $E'$(encode'($y$)) avec $y \approx f(x)$, où $E$ et E' sont des algorithmes de chiffrement homomorphe dont l'espace natif respectif des clairs est M et $M'$, laquelle évaluation est paramétrée par:

- un entier $N \geq 1$ quantifiant la précision effective de la représentation des variables en entrée de la fonction f à évaluer,
- une fonction d'encodage encode prenant en entrée un élément du domaine D et lui associant un élément de $M$,
- une fonction d'encodage encode' prenant en entrée un élément de l'image $\mathcal{J}$ et lui associant un élément de $\mathcal{M}$',
- une fonction de discrétisation discretise prenant en entrée un élément de $\mathcal{M}$ et lui associant un indice représenté par un entier,
- un schéma de chiffrement homomorphe possédant un algorithme de chiffrement $\varepsilon_H$ dont l'espace natif des clairs $\mathcal{M}_H$ est de cardinalité au moins $N$,
- une fonction d'encodage $encode_H$ prenant en entrée un entier et retournant un élément de $\mathcal{M}_H$,

de sorte que l'image du domaine D par l'encodage encode suivi de la discrétisation discretise, (discretise ∘ encode)($\mathcal{D}$), soit un ensemble d'au plus $N$ indices pris parmi $\mathcal{S}$ = {0, ... , $N$ - 1}. Avec ces paramètres, la dite évaluation homomorphe approchée d'une fonction univariée f nécessite la mise en œuvre par le système informatique de traitement de l'information spécifiquement programmé, des deux étapes successives suivantes :

1. une étape de pré-calcul d'une table correspondant à ladite fonction univariée f, consistant à

    a. décomposer le domaine $D$ en $N$ sous-intervalles choisis $R_0$, ..., $R_{N-1}$ dont l'union vaut D,

    b. pour chaque indice $i$ dans $\mathcal{S}$ = {0, ... , $N$ - 1}, déterminer un représentant $x(i)$ dans le sous-intervalle $R_i$ et calculer la valeur y(i) = $f(x(i))$,

    c. retourner la table $T$ constituée des $N$ composantes $T[0]$, ... , $T[N - 1]$, avec

$$T[i] = y(i) \text{ pour } 0 \leq i \leq N - 1 \,;$$

2. une étape d'évaluation homomorphe de la table consistant à

    a. convertir le chiffré E(encode(x)) en le chiffré $\varepsilon_H$($encode_H(\tilde{i})$) pour un entier $\tilde{i}$ ayant pour valeur attendue l'indice $i$ = (discretise ∘ encode)(x) dans l'ensemble $\mathcal{S}$ = {0, ... , $N$ - 1} si $x \in R_i$,

    b. obtenir le chiffré $E'$(encode'($T[\tilde{i}]$)~) pour un élément encode'($T[\tilde{i}]$)~ ayant pour valeur attendue encode'($T[\tilde{i}]$), à partir du chiffré $\varepsilon_H$($encode_H(\tilde{i})$) et de la table $T$,

    c. retourner $E'$(encode'($T[\tilde{i}]$)~).

Lorsque le domaine de définition $\mathcal{D}$ de la fonction $f$ à évaluer est l'intervalle réel [$x_{min}$, $x_{max}$), les $N$ sous-intervalles $R_i$ (pour $0 \leq i \leq N$ - 1) couvrant $\mathcal{D}$ peuvent être choisis comme les intervalles semi-ouverts

$$R_i = \left[\frac{i}{N}(x_{\max} - x_{\min}) + x_{\min}, \frac{i+1}{N}(x_{\max} - x_{\min}) + x_{\min}\right)$$

découpant $\mathcal{D}$ de façon régulière. Plusieurs choix sont possibles pour le représentant $x := x(i)$ de l'intervalle $R_i$. On peut par exemple prendre le point milieu de chaque intervalle, lequel est donné par $x(i) = (x_{\max} - x_{\min})\frac{2i+1}{2N} + x_{\min} \in R_i$ (avec $0 \leq i \leq N$ - 1). Un autre choix est de sélectionner pour x(i) une valeur dans $R_i$ telle que $f(x(i))$ soit proche de la moyenne de $f(x)$ sur l'intervalle $R_i$, ou encore d'une moyenne pondérée par une certaine distribution préalable des $x$ sur l'intervalle $R_i$, pour chaque $0 \leq i \leq N$ - 1, ou de la valeur médiane.

Ainsi dans une des réalisations de l'invention, l'évaluation homomorphe approchée de la fonction univariée f est en outre caractérisée en ce que

- le domaine de définition de la fonction $f$ à évaluer est donné par l'intervalle réel $\mathcal{D}$ = [$x_{min}$, $x_{max}$),
- les $N$ intervalles $R_i$ (pour $0 \leq i \leq N$ - 1) couvrant le domaine $D$ sont les sous-intervalles semi-ouverts

$$R_i = \left[\frac{i}{N}(x_{\max} - x_{\min}) + x_{\min}, \frac{i+1}{N}(x_{\max} - x_{\min}) + x_{\min}\right), \text{ découpant D de façon régulière.}$$

Le choix de l'algorithme $\varepsilon_H$ et de la fonction d'encodage encode$_H$ joue un rôle prépondérant dans la conversion de E(encode(x)) en $\varepsilon_H$(encode$_H$($\tilde{i}$)). On rappelle que pour x $\in$ $\mathcal{D}$, on a (discretise $\circ$ encode)(x) $\in$ $\mathcal{S}$ où $\mathcal{S}$ = {0, ..., N - 1}. Un cas important est lorsque les éléments de $\mathcal{S}$ sont vus comme les éléments d'un sous-ensemble, non nécessairement un sous-groupe, d'un groupe additif. On note $\mathbb{Z}_M$ (l'ensemble des entiers {0, ... , M - 1} muni de l'addition modulo M) pour un entier $M \geq N$ ce groupe additif.

Ainsi dans une des réalisations de l'invention, l'évaluation homomorphe approchée de la fonction univariée f est en outre caractérisée en ce que l'ensemble $\mathcal{S}$ est un sous-ensemble du groupe additif $\mathbb{Z}_M$ pour un entier $M \geq N$.

Il y a plusieurs façons de représenter le groupe $\mathbb{Z}_M$. Ainsi Ducas et Micciancio dans l'article précité d'EUROCRYPT 2015 représentent les éléments de $\mathbb{Z}_M$ comme les exposants d'une variable $X$ ; à un élément i de $\mathbb{Z}_M$ est associé un élément $X^i$, avec $X^M = X^0 = 1$ et $X^j \neq 1$ pour tout $0 < j < M$. On dit que $X$ est une racine primitive $M$-ième de l'unité. Cette représentation permet de passer d'une notation additive à une notation multiplicative : pour tous éléments $i, j \in \mathbb{Z}_M$, l'élément i + j (mod M) est associé à l'élément

$$X^{i+j} = X^i \cdot X^j \left(\mathrm{mod}\,(X^M - 1)\right).$$

L'opération de multiplication modulo $(X^M - 1)$ induit un isomorphisme de groupe entre le groupe additif $\mathbb{Z}_M$ et l'ensemble {1, X, ... , $X^{M-1}$} des racines M-ièmes de l'unité. Lorsque $M$ est pair, la relation $X^M = 1$ implique $X^{M/2} = -1$. On a alors $X^{i+j} = X^i \cdot X^j (\mathrm{mod}\,(X^{M/2} + 1))$ pour $i, j \in \mathbb{Z}_M$ et l'ensemble des racines $M$-ièmes de l'unité est {$\pm 1, \pm X, ..., \pm X^{(M/2)-1}$}. Ainsi dans une des réalisations de l'invention, l'évaluation homomorphe approchée de la fonction univariée $f$ est en outre caractérisée en ce que le groupe $\mathbb{Z}_M$ est représenté de façon multiplicative comme les puissances d'une racine primitive $M$-ième de l'unité notée $X$, de sorte qu'à l'élément $i$ de $\mathbb{Z}_M$ est associé l'élément $X^i$ ; l'ensemble des racines M-ièmes de l'unité {1, X, ..., $X^{M-1}$} formant un groupe isomorphe à $\mathbb{Z}_M$ pour la multiplication modulo $(X^M - 1)$. Dans le cas où l'algorithme de chiffrement homomorphe E est donné par un algorithme de chiffrement de type LWE appliqué au tore $\mathbb{T} = \mathbb{R}/\mathbb{Z}$, on a $\mathcal{M} = \mathbb{T}$ et, si on note $\mu$ = encode(x) avec x $\in$ $\mathcal{D}$ pour une fonction d'encodage encode à valeur dans $\mathbb{T}$, on a E(encode(x)) = ($a_1, ... , a_n, b$) où $a_j \in \mathbb{T}$ (pour $1 \leq j \leq n$) et $b = \sum_{j=1}^{n} s_j \cdot a_j + \mu + e$ (mod 1) avec e un petit bruit aléatoire sur $\mathbb{R}$.

Ainsi dans une des réalisations de l'invention, l'évaluation homomorphe approchée de la fonction univariée $f$ est en outre caractérisée en ce que l'algorithme de chiffrement homomorphe E est donné par un algorithme de chiffrement de type LWE appliqué au tore $\mathbb{T} = \mathbb{R}/\mathbb{Z}$ et a pour espace natif des clairs $\mathcal{M} = \mathbb{T}$.

On paramètre alors la fonction de discrétisation discretise pour un entier $M \geq N$ comme la fonction qui, à un élément $t$ du tore, associe l'arrondi entier du produit $M \times$ t modulo M, où $M \times t$ est calculé dans $\mathbb{R}$ ; on écrit sous forme mathématique

$$\mathrm{discretise} : \mathbb{T} \to \mathbb{Z}, \qquad t \mapsto \mathrm{discretise}(t) = \lceil M \times t \rfloor \bmod M.$$

Cette fonction de discrétisation s'étend naturellement à des vecteurs du tore. Appliquée au vecteur **c** = ($a_1, ..., a_n, b$) de $\mathbb{T}^{n+1}$, on obtient le vecteur $\bar{c}$ de $(\mathbb{Z}_M)^{n+1}$ donné par $\bar{c} = (\overline{a_1} ... , \overline{a_n}, \overline{b})$ avec $\overline{a_j} = \lceil M \times a_j \rfloor \bmod M$ (pour $1 \leq j \leq n$) et

$$\bar{b} = \lceil M \times b \rfloor \bmod M.$$

De façon plus détaillée, si on définit

$$i = \lfloor M \times \mu \rceil \bmod M$$

et

$$\overline{e} = \lfloor M \times e \rceil,$$

on a

$$
\begin{aligned}
\overline{b} &= \left\lceil M \times \left( \sum_{j=1}^{n} s_j \cdot a_j + \mu + e \ (\bmod\ 1) \right) \right\rceil \bmod M \\
&= \left\lceil M \times \left( \sum_{j=1}^{n} s_j \cdot a_j + \mu + e + \delta \right) \right\rceil \bmod M \qquad \text{pour un certain } \delta \text{ dans } \mathbb{Z} \\
&= \left\lceil M \times \left( \sum_{j=1}^{n} s_j \cdot a_j + \mu + e \right) \right\rceil \bmod M \\
&= \left\lceil \sum_{j=1}^{n} s_j \cdot \left( M \cdot a_j \right) + M \cdot \mu + M \cdot e \right\rceil \bmod M \\
&= \left( \sum_{j=1}^{n} s_j \ \overline{a_j} + i + \overline{e} + \Delta \right) \bmod M \qquad \text{pour un petit } \Delta \text{ dans } \mathbb{Z} \ ;
\end{aligned}
$$

l'entier signé $\Delta$ capture l'erreur d'arrondi et est appelé «drift». La valeur attendue du drift est nulle. Par ailleurs, si $|e| < 1/(2M)$ alors $\overline{e} = 0$. On pose

$$\tilde{\imath} = i + \Delta \quad \text{avec} \quad \Delta \in \left\{ -\left\lceil \frac{M}{2} \right\rceil + 1, \ldots, \left\lfloor \frac{M}{2} \right\rfloor \right\},$$

lequel $\tilde{\imath}$ a pour valeur attendue l'entier

$$i = \lfloor M \times \mu \rceil \bmod M = \text{discretise}(\mu).$$

La fonction d'encodage encode est paramétrée de sorte que son image soit contenue dans le sous-intervalle $\left[ 0, \frac{N}{M} - \frac{1}{2M} \right)$ du tore. De la sorte, si $x \in \mathcal{D}$ alors $\mu = \text{encode}(x) \in \left[ 0, \frac{N}{M} - \frac{1}{2M} \right)$ et

$$i =$$

$$\text{discretise}(\mu) = \lfloor M \times \mu \rceil \bmod M \in [0, N).$$

En effet, il est vérifié que si $0 \leq \mu < \frac{N}{M} - \frac{1}{2M}$ alors

$$\lfloor M \times \mu \rceil \geq 0$$

et

$$\lfloor M \times \mu \rceil \leq M \times \mu + \frac{1}{2}$$

$$< M \times \left( \frac{N}{M} - \frac{1}{2M} \right) + \frac{1}{2} = N$$

et donc, comme $N \leq M$,

$$M = \lceil M \times \mu \rfloor \in [0, N).$$

Pour ces fonctions discretise et encode, on a donc bien que $(\text{discretise} \circ \text{encode})(\mathcal{D}) \subseteq \{0, ..., N\text{-}1\} = \mathcal{S}$, autrement dit que $(\text{discretise} \circ \text{encode})(D)$ est un sous-ensemble de l'ensemble d'indices $\mathcal{S} = \{0, ..., N\text{-}1\}$. Ainsi dans une des réalisations de l'invention, l'évaluation homomorphe approchée de la fonction univariée f est en outre caractérisée en ce que

- la fonction d'encodage encode a son image contenue dans le sous-intervalle $\left[ 0, \frac{N}{M} - \frac{1}{2M} \right)$ du tore, et

- la fonction discrétisation discretise applique un élément $t$ du tore à l'arrondi entier du produit $M \times t$ modulo M, où $M \times t$ est calculé dans $\mathbb{R}$ ; sous forme mathématique, discretise: $\mathbb{T} \to \mathbb{Z}$,

$$t \mapsto \text{discretise}(t) = \lceil M \times t \rfloor \bmod M.$$

On remarque que lorsque le domaine de définition de la fonction f à évaluer est l'intervalle réel $\mathcal{D} = [x_{\min}, x_{\max})$ et que l'espace natif des clairs $M$ est le tore $\mathbb{T}$, un choix possible pour la fonction d'encodage encode est encode : $\mathcal{D} \to \mathbb{T}, x \mapsto \frac{2N-1}{2M} \frac{x - x_{\min}}{x_{\max} - x_{\min}}$ . On a alors bien $\text{encode}(x) \in \left[ 0, \frac{N}{M} - \frac{1}{2M} \right)$ pour $x \in \mathcal{D}$ ; on note que $\frac{N}{M} - \frac{1}{2M} = \frac{2N-1}{2M}$ .

Ainsi dans une des réalisations de l'invention, l'évaluation homomorphe approchée de la fonction univariée $f$ est en outre caractérisée en ce que lorsque le domaine de définition de la fonction $f$ est l'intervalle réel $\mathcal{D} = [x_{\min}, x_{\max})$, la fonction d'encodage encode est encode : $[x_{\min}, x_{\max}) \to \left[ 0, \frac{N}{M} - \frac{1}{2M} \right)$ , $x \mapsto \text{encode}(x) = \frac{2N-1}{2M} \frac{x - x_{\min}}{x_{\max} - x_{\min}}$ .

La construction $(\text{discretise} \circ \text{encode})(D)$ donne lieu à une première réalisation de la conversion de $E(\text{encode}(x))$ en $\varepsilon_H(\text{encode}_H(\tilde{\iota}))$. Elle sous-entend que les éléments de l'ensemble $\mathcal{S}$ sont vus directement comme des entiers de $\mathbb{Z}_M$. On prend pour la fonction d'encodage $\text{encode}_H$ la fonction identité, $\text{encode}_H \colon \mathbb{Z}_M \to \mathbb{Z}_M, i \mapsto i$ . Avec les notations précédentes, si on note $\mu = \text{encode}(x) \in \mathbb{T}$ et son chiffré LWE sur le tore $\mathbf{c} = (a_1, ..., a_n, b)$ avec $b = \sum_{j=1}^{n} s_j \cdot a_j + \mu +$ e (mod 1), alors $\mathcal{E}_H(\text{encode}_H(\tilde{\iota})) \in (\mathbb{Z}_M)^{n+1}$ est défini comme

$$\mathcal{E}_H(\text{encode}_H(\tilde{\iota})) \quad = \mathcal{E}_H(\tilde{\iota})$$
$$= (\overline{a_1}, ..., \overline{a_n}, \overline{b})$$

avec

$$\overline{a_j} = \lceil M \times a_j \rfloor \bmod M$$

pour $1 \leq j \leq n$ et

$$\overline{b} = \lfloor M \times b \rceil \bmod M.$$

. Il est à noter que $\overline{b} = \left( \sum_{j=1}^{n} s_j\, \overline{a_j} + \tilde{\imath} + \overline{e} \right) \bmod M$ . Dans ce cas, on observe que $\varepsilon_H$ est un algorithme de chiffrement de type LWE sur l'anneau $\mathbb{Z}_M$ ; la clé de chiffrement est $(s_1, ..., s_n) \in \{0,1\}^n$.

Ainsi dans une des réalisations de l'invention, l'évaluation homomorphe approchée de la fonction univariée $f$ est en outre caractérisée en ce que l'algorithme de chiffrement homomorphe $\varepsilon_H$ est un algorithme de chiffrement de type LWE et la fonction d'encodage encode$_H$ est la fonction identité.

Une deuxième réalisation de la conversion de E(encode(x)) en $\varepsilon_H$(encode$_H(\tilde{\imath})$) s'obtient en considérant les racines $M$-ièmes de l'unité ; cela permet de travailler de façon multiplicative. Plus précisément, on suppose que $M$ est pair et on fixe un polynôme arbitraire $p := p(X)$ de $\mathbb{T}_{M/2}[X]$ . On prend pour la fonction d'encodage encode$_H$ la fonction encode$_H$ :

$$\mathbb{Z}_M \to \mathbb{T}_{M/2}[X], \qquad i \mapsto \mathrm{encode}_H(i) = X^{-i} \cdot p(X)$$

et pour l'algorithme de chiffrement $\varepsilon_H$ un algorithme de chiffrement de type RLWE sur le $\mathbb{Z}_{M/2}[X]$ -module $\mathbb{T}_{M/2}[X]$ . La conversion pour ce choix de encode$_H$ et de $\varepsilon_H$ utilise la technique de recryption. On note $\mathrm{bk}[j] \in \mathbb{T}_{M/2}[X]^{(k+1)\ell \times (k+1)}$ le chiffré de type RGSW de $s_j$, pour $1 \leq j \leq n$, sous une clé $(s'_1, ..., s'_k) \in \mathbb{B}_{M/2}[X]^k$ . La conversion de $E(\mathrm{encode}(x)) = (a_1, ..., a_n, b) \in \mathbb{T}^{n+1}$ en $\varepsilon_H$(encode$_H($ $\tilde{\imath}$)) est donnée par la procédure suivante :

- obtenir les clés publiques de conversion bk[1], ..., bk[n]
- calculer

$$\overline{a_j} = \lceil M \times a_j \rfloor \bmod M$$

pour $1 \leq j \leq n$ et

$$\overline{b} = \lfloor M \times b \rceil \bmod M$$

- initialiser $\mathbf{c}'_0 \leftarrow (0, ..., 0, X^{-\overline{b}} \cdot p(X)) \in \mathbb{T}_{M/2}[X]^{k+1}$

- pour $j$ allant de 1 à $n$, évaluer $\mathbf{c}'_j \leftarrow \left( \left( X^{\overline{a_j}} - 1 \right) \cdot \mathrm{bk}[j] + \mathrm{G} \right) \boxdot \mathbf{c}'_{j-1}$ (dans $\mathbb{T}_{M/2}[X]^{k+1}$ )

- retourner $\mathbf{c}'_n$ comme le résultat $\varepsilon_H$(encode$_H(\tilde{\imath})$).

Dans ce cas, on observe que $\varepsilon_H$ est un algorithme de chiffrement de type RLWE sur le module $\mathbb{T}_{M/2}[X]$ ; la clé de chiffrement est $(s'_1, ..., s'_k) \in \mathbb{B}_{M/2}[X]^k$ . En effet, si on pose $C_j$ un chiffré de type RGSW de $X^{s_j \overline{a_j}}$ sous la clé $(s'_1, ..., s'_k)$ (pour $1 \leq j \leq n$), sous forme mathématique $C_j = \mathrm{RGSW}(X^{s_j \overline{a_j}})$, on a

$$C_j \quad \leftarrow \mathrm{RGSW}\left(X^{s_j \overline{a_j}}\right)$$
$$\leftarrow \mathrm{RGSW}\left(s_j\left(X^{\overline{a_j}} - 1\right) + 1\right)$$
$$\leftarrow \mathrm{RGSW}\left(s_j\left(X^{\overline{a_j}} - 1\right)\right) + \mathrm{RGSW}(1)$$
$$\leftarrow \left(X^{\overline{a_j}} - 1\right) \cdot \mathrm{RGSW}(s_j) + \mathrm{RGSW}(1)$$
$$\leftarrow \left(X^{\overline{a_j}} - 1\right) \cdot \mathrm{bk}[j] + \mathrm{G} \; .$$

Ainsi, si on note RLWE(m) un chiffré de type RLWE pour m $m \in \mathbb{T}_{M/2}[X]$ , sous la clé ($s'_1, \ldots, s'_k$), on a

$$\mathbf{c}'_1 \quad \leftarrow C_1 \boxdot \mathbf{c}'_0 = \mathrm{RGSW}\left(X^{s_1 \overline{a_1}}\right) \boxdot \mathrm{RLWE}\left(X^{-\overline{b}} \cdot p(X)\right)$$
$$\leftarrow \mathrm{RLWE}\left(X^{-\overline{b} + s_1 \overline{a_1}} \cdot p(X)\right)$$

et, par induction,

$$\mathbf{c}'_n \quad \leftarrow \mathrm{RLWE}\left(X^{-\overline{b} + s_1 \overline{a_1} + \cdots + s_n \overline{a_n}} \cdot p(X)\right)$$
$$\leftarrow \mathcal{E}_H\left(\mathrm{encode}_H(\tilde{\iota})\right) \; .$$

Ainsi dans une des réalisations de l'invention, l'évaluation homomorphe approchée de la fonction univariée *f*, paramétrée par un entier *M* pair, est en outre caractérisée en ce que l'algorithme de chiffrement homomorphe $\varepsilon_H$ est un algorithme de chiffrement de type RLWE et la fonction d'encodage encode$_H$ est la fonction encode$_H$: $\mathbb{Z}_M \to \mathbb{T}_{M/2}[X]$ ,$i \mapsto$ encode$_H(i) = X^{-i}. p(X)$ pour un polynôme arbitraire *p* de $\mathbb{T}_{M/2}[X]$ .

On peut maintenant effectuer l'évaluation homomorphe de la table *T* à partir de $\varepsilon_H(\mathrm{encode}_H(\tilde{\iota}))$, suivant l'une des deux réalisations précédentes. Dans les deux cas, on suppose que E est un algorithme de type LWE sur le tore et que *M* est pair et est égal à *2N*.

1. Le premier cas suppose que la fonction d'encodage encode$_H$ est encode$_H$: $\mathbb{Z}_{2N} \to \mathbb{Z}_{2N}$ ,$i \mapsto i$ et que l'algorithme $\varepsilon_H$ est un algorithme de chiffrement de type LWE sur $\mathbb{Z}_{2N}$ . Dans ce premier cas, on a $\varepsilon_H(\mathrm{encode}_H(\tilde{\iota})) = (\overline{a_1}, \ldots, \overline{a_n}, \overline{b})$. Une première sous-étape consiste à :

- former le polynôme $q \in \mathbb{T}_N[X]$ donné par $q(X) = T[0] + T[1]X + \cdots + T'[N-1]X^{N-1} = \sum_{j=0}^{N-1} T'[j]X^j$ avec T'[j] = encode'(T[j]) pour $0 \leq j \leq N - 1$
- obtenir les clés publiques de conversion bk[1], ..., bk[*n*]
- initialiser $\mathbf{c}''_0 \leftarrow (0, \ldots, 0, X^{-\overline{b}} \cdot q(X)) \in \mathbb{T}_N[X]^{k+1}$
- *pour j* allant de 1 à *n*, évaluer $\mathbf{c}''_j = ((X^{\overline{aj}} - 1) \cdot \mathrm{bk}[j] + G) \boxdot \mathbf{c}''_{j-1}$ (dans $\mathbb{T}_N[X]^{k+1}$ )
- poser **d'** = $\mathbf{c}''_n$
- retourner **d'** = RLWE ($X^{-\tilde{\iota}} \cdot q(X)$).

2. Le deuxième cas suppose la fonction d'encodage encode$_H$: $\mathbb{Z}_{2N} \to \mathbb{T}_N[X], i \mapsto X^{-i} \cdot p(X)$ pour un polynôme arbitraire $p := p(X) \in \mathbb{T}_N[X]$ et que l'algorithme $\varepsilon_H$ est un algorithme de chiffrement de type RLWE

sur $\mathbb{T}_N[X]$. Dans ce deuxième cas, on a $\varepsilon(\text{encode}_H(\tilde{i})) = \text{RLWE}(X^{-\tilde{i}} \cdot p(X))$ pour le polynôme arbitraire $p \in \mathbb{T}_N[X]$. Une première sous-étape consiste à :

- sélectionner un polynôme $P := P(X) \in \mathbb{Z}_N[X]$ tel que $P \cdot p \approx q$ avec $q \in \mathbb{T}_N[X]$ donné par
$$q(X) = T'[0] + T'[1]X + \cdots + T'[N-1]X^{N-1} = \sum_{j=0}^{N-1} T'[j]X^j \quad \text{avec } T'[j] = \text{encode}'(T[j])$$
pour $0 \leq j \leq N - 1$

- évaluer **d'** $\leftarrow P \cdot \text{RLWE}(X^{-\tilde{i}} \cdot p(X))$

- retourner **d'** $= \text{RLWE}(X^{-\tilde{i}} \cdot (P(X) \cdot p(X)))$ avec $P(X) \cdot p(X) \approx q(X)$.

En particulier, on note que, pour un entier $L > 1$, si $p(X) = (1 + X + \cdots + X^{N-1}) \cdot \frac{1}{2L}$, alors le choix

$$P(X) = \sum_{j=0}^{N-1} P_j X^j \text{ avec } \begin{cases} P_0 = \lceil L \times (T'[0] + T'[N-1]) \rceil \\ P_j = \lceil L \times (T'[j] - T'[j-1]) \rceil & \text{pour } 1 \leq j \leq N-1 \end{cases}$$

(où la multiplication par $L$ est calculée dans $\mathbb{R}$) implique $P(X) \cdot p(X) \approx T'[0] + T'[1]X + \cdots + T'[N-1]X^{N-1}$. En effet, on observe que pour ce choix du polynôme $p$ on a

$$\begin{aligned}
P(X) \cdot p(X) &= (P_0 + P_1 X + P_2 X^2 + \cdots + P_{N-2}X^{N-2} + P_{N-1}X^{N-1}) \cdot \\
&\quad \left( \frac{1}{2L}(1 + X + X^2 + \cdots + X^{N-2} + X^{N-1}) \right) \\
&= ((P_0 - P_1 - P_2 - \cdots - P_{N-2} - P_{N-1}) \\
&\quad + (P_0 + P_1 - P_2 - \cdots - P_{N-2} - P_{N-1})X \\
&\quad + (P_0 + P_1 + P_2 - \cdots - P_{N-2} - P_{N-1})X^2 \\
&\quad + \cdots \\
&\quad + (P_0 + P_1 + P_2 + \cdots + P_{N-2} - P_{N-1})X^{N-2} \\
&\quad + (P_0 + P_1 + P_2 + \cdots + P_{N-2} + P_{N-1})X^{N-1}) \cdot \frac{1}{2L} \\
&\approx (\lceil 2L \times T'[0] \rceil + \lceil 2L \times T'[1] \rceil X + \cdots + \lceil 2L \times T'[N-1] \rceil X^{N-1}) \cdot \frac{1}{2L} \\
&\approx T'[0] + T'[1]X + \cdots + T'[N-1]X^{N-1} = q(X)
\end{aligned}$$

en notant que, pour

$$0 \leq r \leq N-1, \ \sum_{j=0}^{r} P_j = P_0 + \sum_{j=1}^{r} P_j \approx \lceil L \times (T'[0] + T'[N-$$

$$1]) \rceil + \lceil L \times (T'[r] - T'[0]) \rceil \approx \lceil L \times (T'[r] + T'[N-1]) \rceil$$

et

$$-\sum_{j=r+1}^{N-1} P_j \approx \lceil L \times$$

$$(T'[r] - T'[N-1]) \rceil.$$

On remarque que $P \cdot p \approx q$ ; l'égalité étant vérifiée au drift près, lequel a une valeur attendue nulle.

Dans les deux cas, on obtient en retour de cette première sous-étape de l'évaluation homomorphe de la table $T$ un chiffré de type RLWE **d'** du polynôme attendu $X^{-\tilde{i}} \cdot q(X)$ sous une clé $(s'_1, ..., s'_k) \in \mathbb{B}_N[X]^{k+1}$, laquelle clé étant celle utilisée pour produire les chiffrés de type RGSW bk[$j$] ($1 \leq j \leq n$) chiffrant les bits $s_j$ de la clé secrète $(s_1, ..., s_n) \in \{0,1\}^n$. De par la forme de $q(X)$, le terme constant du polynôme $X^{-\tilde{i}} \cdot q(X) = X^{-\tilde{i}} \cdot (T'[0] + T'[1]X + \cdots + T'[N]X^{N-1})$ est $T'[\tilde{i}] = $ *encode*'$(T[\tilde{i}])$. On note $(a'_1, ..., a'_k, b') \in \mathbb{T}_N[X]^{k+1}$ les composantes du chiffré **d'**.

Une deuxième sous-étape (commune aux deux cas) de l'évaluation homomorphe de la table $T$ extrait un chiffré de type LWE de $T'[i] = $ encode'$(T[\tilde{i}])$ dudit chiffré RLWE :

- pour chaque $1 \leq j \leq k$, écrire le polynôme $a'_j := a'_j(X) \in \mathbb{T}_N[X]$ comme $a'_j(X) = \sum_{l=0}^{N-1}(a'_j)_l X^l$ avec $(a'_j)_l \in \mathbb{T}$ (pour $0 \leq l \leq N - 1$)

- écrire le polynôme $b' := b'(X) \in \mathbb{T}_N[X]$ comme $b'(X) = \sum_{l=0}^{N-1}(b')_l X^l$ avec $(b')_l \in \mathbb{T}$ (pour $0 \leq l \leq N - 1$)

- définir le vecteur d'éléments sur le tore $(a''_1, ..., a''_{kN}) \in \mathbb{T}^{kN}$ où

$$\begin{cases} a''_{1+j} = (a_j)_0 & \text{pour } 1 \leq j \leq k \\ a''_{1+l+j} = -(a_j)_{N-l} & \text{pour } 1 \leq j \leq k \text{ et } 1 \leq l \leq N-1 \end{cases}$$

- retourner le vecteur d'éléments sur le tore $(a''_1, ..., a''_{kN}, b'') \in \mathbb{T}^{kN+1}$ où $b'' = (b')_0$ est le terme constant du polynôme $b'$.

Si pour chaque $1 \leq j \leq k$, on écrit le polynôme $s'_j := s'_j(X) \in \mathbb{B}_N[X]$ comme $s'_j(X) = \sum_{l=0}^{N-1}(s'_j)_l X^l$ avec $(s'_j)_l \in \mathbb{B} = \{0,1\}$ (pour $0 \leq l \leq N - 1$), on s'aperçoit que le vecteur retourné $(a''_1, ..., a''_{kN}, b'')$ est un chiffré de type LWE sur le tore de $T'[\tilde{i}] = $ encode'$(T[\tilde{i}])$ sous la clé $((s'_1)_0, (s'_1)_1, ..., (s'_1)_{N-1}, ..., (s'_k)_0, (s'_k)_1, ..., (s'_k)_{N-1}) \in \{0,1\}^{kN}$. Ceci définit l'algorithme de chiffrement $E'$ ; on a ainsi $(a''_1, ..., a''_{kN}, b'') = E'(\text{encode}'(T[\tilde{i}]))$. Dans ce cas, l'espace natif des clairs correspondant est $\mathcal{M}' = \mathbb{T}$. Comme $T[\tilde{i}] = y(\tilde{i})$ et $y(\tilde{i}) \approx f(x)$, on obtient donc bien un chiffré de type LWE d'un encodé d'une valeur approchée de $f(x)$.

À l'issue de ce calcul, le chiffré $E'(\text{encode}'(T[\tilde{i}])'')$ peut être déchiffré et décodé pour donner une valeur approchée de $f(x)$.

Ainsi dans une des réalisations de l'invention, l'évaluation homomorphe approchée de la fonction univariée $f$, paramétré par un entier $M$ pair égal à $2N$, est en outre caractérisée en ce qu'un chiffré de type LWE $E'(\text{encode}'(T[\tilde{i}]))$ sur le tore est extrait d'un chiffré RLWE approchant le polynôme $X^{-\tilde{i}} \cdot q(X) \in \mathbb{T}_N[X]$ avec

$$q(X) = T'[0] + T'[1]X + \cdots + T'[N-$$

$$q(X) \quad = \quad T[0] \quad + \quad T[1]X \quad + \cdots \quad + \quad T[N \quad - \quad 1]X^{N-1} = \sum_{j=0}^{N-1} T'[j]X^j \qquad \text{dans}$$

$\mathbb{T}_N[X]$ et où $T'[j] = \text{encode}'(T[j]), 0 \leq j \leq N - 1$.

Lorsque l'image $\mathcal{J}$ de la fonction $f$ à évaluer est l'intervalle réel $[y_{min}, y_{max})$ et que l'espace natif des clairs $\mathcal{M}'$ pour un chiffrement de type LWE est le tore $\mathbb{T}$, un choix possible pour la fonction d'encodage encode' est encode':

$\mathcal{J} \to \mathbb{T}, y \mapsto \text{encode}'(y) = \frac{y - y_{min}}{y_{max} - y_{min}}$. Dans ce cas, la fonction de décodage correspondante est donnée par $y' \mapsto y'(y_{max} - y_{min}) + y_{min}$.

Ainsi dans une des réalisations de l'invention, l'évaluation homomorphe approchée de la fonction univariée $f$ est en outre caractérisée en ce que, lorsque l'image de la fonction $f$ est l'intervalle réel $\mathcal{J} = [y_{min}, y_{max})$,

- l'algorithme de chiffrement homomorphe E' est donné par un algorithme de chiffrement de type LWE appliqué au tore $\mathbb{T} = \mathbb{R}/\mathbb{Z}$ et a pour espace natif des clairs

$$\mathcal{M}' = \mathbb{T},$$

- la fonction d'encodage encode' est encode': $[y_{min}, y_{max}) \to \mathbb{T}, y \mapsto \text{encode}'(y) = \frac{y - y_{min}}{y_{max} - y_{min}}$ .

L'encodage doit être pris en compte lors de l'addition de chiffrés. Si on note encode la fonction d'encodage d'un algorithme de chiffrement homomorphe $E$, on a alors $E(\mu_1 + \mu_2) = E(\mu_1) + E(\mu_2)$ avec $\mu_1 = \text{encode}(x_1)$ et $\mu_2 = \text{encode}(x_2)$. Si la fonction d'encodage est homomorphe, on a alors bien $E(\text{encode}(x_1 + x_2)) = E(\text{encode}(x_1)) + E(\text{encode}(x_2))$. Dans le cas contraire, si la fonction d'encodage ne respecte pas l'addition, une correction $\varepsilon$ doit être appliquée sur l'encodage : $\varepsilon = \text{encode}(x_1 + x_2) - \text{encode}(x_1) - \text{encode}(x_2)$ de sorte que $E(\text{encode}(x_1 + x_2)) = E(\text{encode}(x_1)) + E(\text{encode}(x_2)) + E(\varepsilon)$. En particulier, quand l'encodage est défini par encode: $x \mapsto \frac{N-1}{2M} \frac{x - x_{min}}{x_{max} - x_{min}}$, la correction vaut $\varepsilon = \frac{N-1}{2M} \frac{x_{min}}{x_{max} - x_{min}}$ et est nulle pour $x_{min} = 0$. On rappelle que pour un schéma de chiffrement de type LWE, un uplet de la forme $(0, ..., 0, \varepsilon)$ est un chiffré valide de $\varepsilon$.

Les considérations précédentes restent bien entendu valables sur les images. Pour un algorithme de chiffrement homomorphe $E'$ de fonction d'encodage encode', on a $E'(\text{encode}'(f(x_1) + f(x_2))) = E'(\text{encode}'(f(x_1))) + E'(\text{encode}'(f(x_2))) + E'(\varepsilon')$ pour une correction $\varepsilon' = \text{encode}'(f(x_1) + f(x_2)) - \text{encode}'(f(x_1)) - \text{encode}'(f(x_2))$. En particulier, la correction $\varepsilon'$ est nulle lorsque l'encodage encode' respecte l'addition. La correction $\varepsilon'$ vaut $\varepsilon' = \frac{y_{min}}{y_{max} - y_{min}}$ pour l'encodage encode':

$y \mapsto \frac{y - y_{min}}{y_{max} - y_{min}}$ .

Un autre cas particulier important est lorsqu'une même fonction univariée f doit être évaluée homomorphiquement sur des entrées $x_1$ et $x_2 = x_1 + A$ pour une constante $A$ donnée. Un exemple d'application typique est la fonction interne $\Psi$ dans la construction de Sprecher décrite plus haut. Pour un algorithme de chiffrement homomorphe E de fonction d'encodage encode, étant donné $E(\text{enode}(x_1))$, on pourrait en déduire $E(\text{encode}(x_2)) = E(\text{encode}(x_1 + A))$ et ensuite obtenir $E'(\text{encode}'f(x_1)))$ et $E'(\text{encode}'(f(x_2)))$ comme expliqué précédemment. Il n'est cependant pas forcément nécessaire de répéter toutes les étapes. Dans le cas particulier où $E$ est un algorithme de type LWE sur le tore et que $M = 2N$, sur l'entrée $E(\text{encode}(x_1))$, on a vu qu'en retour de la première sous-étape de l'évaluation homomorphe de la table T, on obtient un chiffré de type RLWE d' du polynôme attendu $X^{-\tilde{\iota}_1} \cdot q(X)$ où le polynôme q tabule la fonction $f$ et où $\tilde{\iota}_1$ a pour valeur attendue $i_1 = \text{discretise}(\text{encode}(x_1))$ si $x_1$ appartient au sous-intervalle $R_{i_1}$. Par exemple, pour la fonction de discrétisation discretise:

$$t \mapsto \bar{t} =$$

$$\lceil M \times t \rfloor$$

(modM) avec *M = 2N,* on obtient

$$i_2 \quad := \text{discretise}\big(\text{encode}(x_2)\big) = \text{discretise}\big(\text{encode}(x_1 + A)\big)$$
$$= \text{discretise}(\text{encode}(x_1) + \text{encode}(A) + \varepsilon)$$
$$= \lceil 2N \times (\text{encode}(x_1) + \text{encode}(A) + \varepsilon) \rfloor \bmod 2N$$
$$\approx i_1 + \overline{\mu_A} \;(\bmod\, 2N) \quad \text{avec } \overline{\mu_A} := \lceil 2N \times (\text{encode}(A) + \varepsilon) \rfloor$$

et donc $X^{-\tilde{\imath}_2} \cdot q(X) \approx X^{-\tilde{\imath}_1 - \overline{\mu_A}} \cdot q(X) = X^{-\tilde{\mu_A}} \cdot (X^{-\tilde{\imath}_1} \cdot q(X))$. Dans ce cas, un chiffré de type RLWE du polynôme attendu $X^{-\tilde{\imath}2} \cdot q(X)$ peut s'obtenir plus rapidement comme $X^{-\overline{\mu_A}} \cdot$ d'. Une valeur pour $E'(\text{encode}'(f(x_2))\tilde{\ })$ en est alors déduite par la deuxième sous-étape de l'évaluation homomorphe de la table *T*.

L'invention couvre également un système de traitement de l'information qui est spécifiquement programmé pour mettre en œuvre un procédé cryptographique d'évaluation homomorphe conforme à l'une ou l'autre des variantes de procédé décrites ci-dessus.

De même, elle couvre le produit-programme informatique qui est spécifiquement conçu pour mettre en œuvre l'une ou l'autre des variantes de procédé décrites ci-dessus et pour être chargé et mis en œuvre par un système de traitement de l'information programmé dans ce but.

## Exemples d'application de l'invention

L'invention décrite ci-dessus peut être très avantageusement utilisée pour préserver la confidentialité de certaines données, par exemple mais non exclusivement des données personnelles, de santé, des informations classifiées ou plus généralement toutes données que son détenteur veut conserver secrètes mais sur lesquelles il souhaiterait qu'un tiers puisse effectuer des traitements numériques. La délocalisation du traitement vers un ou plusieurs tiers prestataires est intéressante à plusieurs titres : elle permet d'effectuer des opérations demandant autrement certaines ressources coûteuses ou non disponibles ; elle permet également d'effectuer des opérations non publiques. De son côté, le tiers en charge de réaliser lesdits traitements numériques peut en effet vouloir ne pas communiquer la teneur précise du traitement et des fonctions numériques qu'il met en œuvre.

Dans une telle utilisation, l'invention couvre la mise en œuvre d'un service numérique à distance, tel que notamment un service d'informatique en nuage (*cloud computing*) dans lequel un tiers prestataire ayant en charge l'application du traitement numérique sur les données chiffrées, réalise de son côté une première étape de pré-calcul décrite plus haut, qui consiste, pour chaque fonction multivariée $f_j$ parmi les fonctions $f_1, ..., f_q$ qui vont être utilisées pour traiter les données chiffrées, à pré-calculer un réseau de fonctions univariées. Parmi l'ensemble des fonctions univariées résultant ($\{g_k(z_{i_k})\}_k$ pour un certain $z_{i_k}$ avec $k \geq 1$), le tiers présélectionne dans une deuxième étape des fonctions univariées $g_k$ et leur argument respectif $z_{i_k}$ telles qu'il existe un $k' < k$ vérifiant un des trois critères (i) $g_k = g_{k'}$ et $z_{i_k} = z_{i_{k'}}$, (ii) $g_k \neq g_{k'}$ et $z_{i_k} = z_{i_{k'}}$, ou (iii) $g_k = g_{k'}$ et $z_{i_k} = z_{i_{k'}} + a_k$ pour une constante connue $a_k \neq 0$ ; ces fonctions univariées seront le cas échéant évaluées de façon optimisée.

De son côté, le détenteur des données confidentielles ($x_1, ..., x_p$) réalise le chiffrement de celles-ci par un algorithme *E* de chiffrement homomorphe de façon à transmettre au tiers des données de type $E(\mu_1), ..., E(\mu_p)$, où $\mu_i$ est la valeur encodée de $x_i$ par une fonction d'encodage. Typiquement, le choix de l'algorithme E est imposé par le tiers prestataire du service. De façon alternative, le détenteur de données peut utiliser un algorithme de chiffrement de son choix, non nécessairement homomorphe, auquel cas une étape préalable de recryption sera effectuée par le tiers (ou un autre prestataire) pour obtenir les données chiffrées dans le format souhaité.

Ainsi dans une des réalisations de l'invention, le ou les procédés cryptographiques d'évaluation homomorphe précédemment décrits est caractérisé en ce que les données chiffrées en entrée sont issues d'une étape préalable de recryption pour être mises sous la forme de chiffrés d'encodés dudit algorithme de chiffrement homomorphe *E*.

Lorsque le tiers a obtenu les données chiffrées de type $E(\mu_i)$, à l'étape d'évaluation homomorphe du réseau de fonctions univariées, il évalue homomorphiquement en une série d'étapes successives à partir de ces chiffrés chacun des réseaux de fonctions univariées, de façon à obtenir les chiffrés d'encodés de $f_j$ appliquée à leurs entrées (pour $1 \leq j \leq q$) sous l'algorithme de chiffrement *E'*.

Une fois qu'il a obtenu, pour la ou les différentes fonctions $f_j$ concernées les résultats chiffrés des encodés sur leurs valeurs d'entrée, le tiers concerné renvoie au détenteur des données confidentielles l'ensemble de ces résultats.

Le détenteur des données confidentielles peut alors à partir de la clé de déchiffrement correspondante dont il dispose, après décodage, obtenir une valeur du résultat d'une ou plusieurs fonctions ($f_1,...,f_q$) en partant de données d'entrée ($x_1, ..., x_p$) chiffrées homomorphiquement, sans que le tiers ayant réalisé sur lesdites données le traitement numérique consistant à la mise en œuvre d'une ou plusieurs fonctions, n'ait pu connaître le contenu clair des données ni que, réciproquement, le détenteur des données n'ait eu à connaître le détail de la ou des fonctions mises en œuvre.

Un tel partage de tâches entre le détenteur des données et le tiers agissant comme prestataire de traitement numérique peut avantageusement se réaliser à distance, et notamment au travers de services de type *cloud computing* sans affecter la sécurité des données et des traitements concernés. Par ailleurs, les différentes étapes du traitement numérique peuvent être à la charge de prestataires différents.

Ainsi, dans une des réalisations de l'invention, un service à distance de type *cloud computing* met en œuvre un ou plusieurs des procédés cryptographiques d'évaluation homomorphe précédemment décrits, dans lequel les tâches sont partagées entre le détenteur des données et le ou les tiers agissant comme prestataires de traitement numérique.

Dans une réalisation particulière de l'invention, ce service à distance faisant intervenir le détenteur des données $x_1, ..., x_p$ qu'il veut conserver secrètes et un ou plusieurs tiers ayant en charge l'application du traitement numérique sur lesdites données, est en outre caractérisé en ce que

1. le ou les tiers concernés réalisent, selon l'invention, la première étape de pré-calcul de réseaux de fonctions univariées et la deuxième étape de pré-sélection
2. le détenteur des données réalise le chiffrement de $x_1, ..., x_p$ par un algorithme $E$ de chiffrement homomorphe, et transmet au tiers des données de type $E(\mu_1), ..., E(\mu_p)$, où $\mu_i$ est la valeur encodée de $x_i$ par une fonction d'encodage
3. lorsque le tiers concerné a obtenu les données chiffrées de type $E(\mu_i)$, il évalue homomorphiquement en une série d'étapes successives à partir de ces chiffrés chacun desdits réseaux de fonctions univariées, de façon à obtenir les chiffrés d'encodés de $f_j$ appliquée à leurs entrées (pour $1 \leq j \leq q$) sous l'algorithme de chiffrement E'
4. une fois qu'il a obtenu, pour la ou les différentes fonctions $f_j$ concernées les résultats chiffrés des encodés sur leurs valeurs d'entrée, le tiers concerné renvoie au détenteur des données l'ensemble de ces résultats
5. le détenteur des données obtient à partir de la clé de déchiffrement correspondante dont il dispose, après décodage, une valeur du résultat d'une ou plusieurs fonctions $(f_1, ..., f_q)$.

Une variante de cette réalisation est caractérisée en ce que, dans la deuxième étape (2.) ci-dessus :

- le détenteur des données réalise le chiffrement de $x_1, ..., x_p$ par un algorithme de chiffrement différent de E et, transmet lesdites données ainsi chiffrées
- sur lesdites données chiffrées reçues, le tiers concerné effectue une recryption pour obtenir les chiffrés $E(\mu_1), ..., E(\mu_p)$ sous ledit algorithme de chiffrement homomorphe $E$, où $\mu_i$ est la valeur encodée de $x_i$ par une fonction d'encodage.

Différentes applications du service numérique à distance suivant l'invention peuvent être mentionnées, parmi d'autres. Ainsi on sait déjà, comme mentionné dans l'article de MajecSTIC '08 précité, une décomposition de type Kolmogorov appliquée à des images en niveaux de gris -pouvant être vues comme des fonctions bivariées $f(x, y) = I(x, y)$ où $I(x, y)$ donne l'intensité en gris du pixel de coordonnées $(x, y)$- permet de reconstruire une image approchée de l'image originale. Par conséquent, la connaissance de coordonnées $(x_1, y_1)$ et $(x_2, y_2)$ définissant une *bounding box* permet d'effectuer simplement des opérations de recadrage (*cropping* en anglais). Un traitement similaire s'applique sur des images en couleur en considérant les fonctions bivariées $f_1(x, y) = R(x, y)$, $f_2(x, y) = G(x, y)$ et $f_3(x, y) = B(x, y)$ donnant respectivement les niveaux de rouge, de vert et de bleu. Là où l'on connaissait ce type de traitement sur des données non chiffrées, l'invention permet désormais de le réaliser en utilisant le chiffrement homomorphe. Ainsi selon l'invention, si un utilisateur envoie de manière chiffrée ses coordonnées GPS relevées à intervalles réguliers (par exemple toutes les 10 secondes) durant une activité sportive ainsi que les coordonnées extrêmes de son parcours (définissant une *bounding box*), le prestataire de services possédant l'image d'un plan cartographique pourra obtenir le chiffré de la portion du plan relative à l'activité par recadrage ; en outre, il pourra, toujours dans le domaine chiffré, représenter le parcours en utilisant par exemple un code couleur pour indiquer la vitesse locale calculée homomorphiquement à partir des chiffrés des coordonnées GPS reçues. De façon avantageuse, le prestataire (tiers) n'a aucune connaissance du lieu exact de l'activité (si ce n'est qu'il se trouve sur son plan) ni des performances de l'utilisateur. En outre, le tiers ne dévoile pas l'entièreté de la carte.

L'invention peut être également avantageusement utilisée pour permettre d'effectuer des traitements d'intelligence artificielle, en particulier de type *machine-learning* sur des données d'entrée qui demeurent chiffrées et sur lesquelles le prestataire de service mettant en œuvre notamment un réseau de neurones applique une ou plusieurs fonctions d'activation sur des valeurs issues desdites données chiffrées. À titre d'exemple de cette utilisation de l'invention en relation avec la mise en œuvre d'un réseau de neurones, on peut évoquer la décomposition de la fonction $g(z_1, z_2) = \max(z_1, z_2)$, qui sert notamment au «max pooling» précité utilisé par les réseaux de neurones, en $z_2 + (z_1 - z_2)^+$ où $z \mapsto z^+$ correspond à la fonction univariée $z \mapsto \max(z, 0)$. On peut également évoquer les très populaires fonctions d'activation

ReLU: $\mathbb{R} \to \mathbb{R}^+, t \mapsto t^+$ et sigmoid: $\mathbb{R} \to [0,1], t \mapsto \frac{1}{1+\exp(-t)}$ .

Ainsi, dans une des réalisations de l'invention, un service à distance mettant en œuvre un ou plusieurs des procédés cryptographiques d'évaluation homomorphe précédemment décrits, est destiné à des traitements numériques mettant en œuvre des réseaux de neurones.

**Exposé de l'invention telle qu'elle est caractérisée**

L'invention permet l'évaluation, sur des données chiffrées, d'une ou plusieurs fonctions par la mise en œuvre des capacités de calcul et de traitement de données d'un ou plusieurs systèmes de traitement numérique de l'information. Suivant les cas, cette ou ces fonctions peuvent être univariées ou multivariées. Le procédé selon l'invention permet donc dans ses différentes variantes de procéder à l'évaluation des deux types de fonctions.

Lorsque la ou les fonctions à évaluer sont de type multivariées, l'invention prévoit tout d'abord de réaliser deux étapes préliminaires : la première de pré-calcul, suivie d'une deuxième étape de pré-sélection avant d'appliquer sur le ou les réseaux de fonctions univariées obtenues à l'issue de l'exécution de ces deux étapes préliminaires une troisième étape d'évaluation homomorphe desdits réseaux de fonctions univariées selon toute méthode connue d'évaluation homomorphe de fonction univariée. Cela fait l'objet de la revendication 1.

Plusieurs variantes dudit procédé sont présentées dans les revendications 2 à 5, suivant que l'étape initiale de pré-calcul peut mettre en œuvre différents techniques mathématiques décrites plus haut : la décomposition de type Kolmogorov ou d'une de ses variantes algorithmiques telle celle proposée par Sprecher (dans la revendication 5), le recours à une somme de fonctions multivariées particulières appelées fonctions *ridge* (dans les revendications 2 et 4) ou encore par l'utilisation de fonctions dites radiales (dans les revendications 3 et 4). Dans certains cas particuliers, l'invention prévoit encore qu'il peut être avantageux de n'utiliser aucune de ces trois variantes précitées mais de procéder simplement à une décomposition formelle utilisant différentes équivalences formelles (comme celles revendiquées dans chacune des revendications 6 à 10).

Lorsque la ou les fonctions à évaluer sont de type univariées, l'invention prévoit dans une de ses réalisations la mise en œuvre respectivement en entrée et en sortie de deux algorithmes de chiffrement homomorphe et l'étape de pré-calcul d'une table pour chaque fonction considérée suivie d'une étape d'évaluation homomorphe de la table ainsi obtenue, comme cela est revendiquée par la revendication 11. Cette modalité d'évaluation homomorphe d'une ou plusieurs fonctions univariées peut avantageusement être également mise en œuvre pour effectuer la troisième étape d'évaluation homomorphe prévue à l'issue des étapes de pré-calcul et de pré-sélection qui ont été préalablement appliquées à une ou plusieurs fonctions multivariées, selon la revendication 1.

La revendication 11 couvre deux variantes d'une telle combinaison, y compris lorsque la phase initiale de pré-calcul utilise une transformation approchée (comme caractérisé dans les revendications 2 à 5) ou une transformation basée sur une équivalence formelle (comme caractérisé dans les revendications 6 à 10).

**Revendications**

1. Procédé cryptographique exécuté sous forme numérique par un au moins système de traitement de l'information spécifiquement programmé pour effectuer l'évaluation d'une ou plusieurs fonctions multivariées à valeur réelle $f_1, ..., f_q$, chacune des fonctions prenant en entrée une pluralité de variables réelles parmi les variables $x_1, ..., x_p$, et au moins une desdites fonctions prenant en entrée au moins deux variables,

   prenant en entrée les chiffrés des encodés de chacune des entrées $x_i$, $E(\text{encode}(x_i))$ avec $1 \leq i \leq p$, et retournant la pluralité de chiffrés d'encodés de $f_1, ..., f_q$ appliquées à leurs entrées respectives, où $E$ est un algorithme de chiffrement homomorphe et encode est une fonction d'encodage qui associe à chacun des réels $x_i$ un élément de l'espace natif des clairs de $E$,
   **caractérisé par** :

   - a. une étape de pré-calcul consistant à transformer chacune desdites fonctions multivariées en un réseau de fonctions univariées, constitué de compositions de fonctions univariées à valeur réelle et de sommes, où le domaine de définition d'une fonction univariée $f$ à évaluer est discrétisé en plusieurs intervalles pavant son domaine de définition, chaque intervalle étant représenté par une valeur $x_i$ ainsi que par une valeur correspondante de la fonction $f(x_i)$, la fonction $f$ étant ainsi tabulée par une série de couples de la forme $(x_i, f(x_i))$, ces couples étant utilisés pour calculer homomorphiquement un chiffré de $f(x)$, ou d'une valeur approchée, à partir d'un chiffré de $x$, pour une valeur de $x$ arbitraire dans le domaine de définition de la fonction,
   - b. une étape de pré-sélection consistant à identifier dans lesdits réseaux de fonctions univariées précalculés les redondances d'un des trois types

∘ mêmes fonctions univariées appliquées à des mêmes arguments,
∘ fonctions univariées différentes appliquées à des mêmes arguments,
∘ mêmes fonctions univariées appliquées à des arguments différant d'une constante additive non nulle

et en sélectionner tout ou partie
- c. une étape d'évaluation homomorphe de chacun des réseaux de fonctions univariées précalculés, dans laquelle lorsque tout ou partie d'une ou plusieurs de ces fonctions univariées est réutilisée les redondances sélectionnées à l'étape de pré-sélection sont évaluées de façon mutualisée.

2. Procédé cryptographique selon la revendication 1, **caractérisé en ce que** pour au moins une fonction $f_j$ parmi $f_1, ..., f_q$, la transformation de l'étape de pré-calcul est une transformation approchée de la forme

$$f_j(x_{j_1}, ..., x_{j_t}) \approx \sum_{k=0}^{K} g_k \left( \sum_{i=1}^{t} a_{i,k}\, x_{j_i} \right)$$ avec $t \leq p$ et $j_1, ..., j_t \in \{1, ..., p\}$, et où les coefficients $a_{i,k}$ sont des nombres réels et où les $g_k$ sont des fonctions univariées définies sur les réels et à valeur réelle, lesdites fonctions $g_k$ et lesdits coefficients $a_{i,k}$ étant déterminés en fonction de $f_j$, pour un paramètre $K$ donné.

3. Procédé cryptographique selon la revendication 1, **caractérisé en ce que** pour au moins une fonction $f_j$ parmi $f_1, ..., f_q$, la transformation de l'étape de pré-calcul est une transformation approchée de la forme

$$f_j(x_{j_1}, ..., x_{j_t}) \approx \sum_{k=0}^{K} g_k \left( \| \mathbf{x} - \mathbf{a_k} \| \right)$$ avec $\mathbf{x} = (x_{j_1}, ..., x_{j_t})$, $\mathbf{a_k} = (a_{1,k}, ..., a_{t,k})$, $t \leq p$ et $j_1, ..., j_t \in 1, ...,$

$p\}$, et où les vecteurs $\mathbf{a_k}$ ont pour coefficients $a_{i,k}$ des nombres réels et où les $g_k$ sont des fonctions univariées définies sur les réels et à valeur réelle, lesdites fonctions $g_k$ et lesdits coefficients $a_{i,k}$ étant déterminés en fonction de $f_j$, pour un paramètre $K$ donné et une norme $\|\cdot\|$ donnée.

4. Procédé cryptographique selon l'une des revendications 2 ou 3, **caractérisé en ce que** les coefficients $a_{i,k}$ sont fixés.

5. Procédé cryptographique selon la revendication 1, **caractérisé en ce que** pour au moins une fonction $f_j$ parmi $f_1, ..., f_q$, la transformation de l'étape de pré-calcul est une transformation approchée de la forme

$$f_j(x_{j_1}, ..., x_{j_t}) \approx \sum_{k=0}^{K} g_k \left( \sum_{i=1}^{t} \lambda_{j_i}\, \Psi(x_{j_i} + ka) \right)$$ avec $t \leq p$ et $j_1, ..., j_t \in \{1, ..., p\}$, et où $\Psi$ est une

fonction univariée définie sur les réels et à valeur réelle, où les $\lambda_{j_i}$ sont des constantes réelles et où les $g_k$ sont des fonctions univariées définies sur les réels et à valeur réelle, lesdites fonctions $g_k$ étant déterminées en fonction de $f_j$, pour un paramètre $K$ donné.

6. Procédé cryptographique selon la revendication 1, **caractérisé en ce que** la transformation de l'étape de pré-calcul utilise l'équivalence formelle $\max(z_1, z_2) = z_2 + (z_1 - z_2)^+$ pour exprimer la fonction $(z_1, z_2) \mapsto \max(z_1, z_2)$ comme une combinaison de sommes et compositions de fonctions univariées.

7. Procédé cryptographique selon la revendication 1, **caractérisé en ce que** la transformation de l'étape de pré-calcul utilise l'équivalence formelle $\min(z_1, z_2) = z_2 + (z_1 - z_2)^-$ pour exprimer la fonction $(z_1, z_2) \mapsto \min(z_1, z_2)$ comme une combinaison de sommes et compositions de fonctions univariées.

8. Procédé cryptographique selon la revendication 1, **caractérisé en ce que** la transformation de l'étape de pré-calcul utilise l'équivalence formelle $z_1 \times z_2 = (z_1 + z_2)^2/4 - (z_1 - z_2)^2/4$ pour exprimer la fonction $(z_1, z_2) \mapsto z_1 \times z_2$ comme une combinaison de sommes et compositions de fonctions univariées.

9. Procédé cryptographique selon la revendication 1, **caractérisé en ce que** la transformation de l'étape de pré-calcul utilise l'équivalence formelle $|z_1 \times z_2| = \exp(\ln|z_1| + \ln|z_2|)$ pour exprimer la fonction $(z_1, z_2) \mapsto |z_1 \times z_2|$ comme une combinaison de sommes et compositions de fonctions univariées.

10. Procédé cryptographique selon l'une des revendications 6 à 9, **caractérisé en ce que** l'équivalence formelle est obtenue à partir de l'itération de l'équivalence formelle pour deux variables, pour ladite fonction lorsque celle-ci comporte trois variables ou plus.

11. Procédé cryptographique selon l'une des revendications 1 à 10, comportant dans l'étape d'évaluation homomorphe d'au moins un des réseaux de fonctions univariées précalculés, un sous-procédé d'évaluation homomorphe approchée d'au moins une desdites fonctions univariées $f$ d'une variable réelle $x$ de précision arbitraire dans un

domaine de définition $\mathcal{D}$ et à valeur réelle dans une image $\mathcal{J}$, prenant en entrée le chiffré d'un encodé de *x, E* (encode(*x*)), et retournant le chiffré d'un encodé d'une valeur approchée de *f(x), E'*(encode'(*y*)) avec $y \approx f(x)$, où *E* et *E'*

sont des algorithmes de chiffrement homomorphe dont l'espace natif respectif des clairs est $\mathcal{M}$ et $\mathcal{M}$',

ledit sous-procédé étant paramétré par :

- un entier $N \geq 1$ quantifiant la précision effective de la représentation des variables en entrée de la fonction *f* à évaluer,

- une fonction d'encodage encode prenant en entrée un élément du domaine $\mathcal{D}$ et lui associant un élément

de $\mathcal{M}$,

- une fonction d'encodage encode' prenant en entrée un élément de l'image $\mathcal{J}$ et lui associant un élément de

$\mathcal{M}$',

- une fonction de discrétisation discretise prenant en entrée un élément de *M* et lui associant un indice représenté par un entier,

- un schéma de chiffrement homomorphe possédant un algorithme de chiffrement $\varepsilon_H$ dont l'espace natif des

clairs $\mathcal{M}_H$ est de cardinalité au moins *N*,

- une fonction d'encodage encode$_H$ prenant en entrée un entier et retournant un élément de $\mathcal{M}_H$,

de sorte que l'image du domaine D par l'encodage encode suivi de la discrétisation discretise, (discretise ∘ encode) (D), soit un ensemble d'au plus *N* indices pris parmi $\mathcal{S}$ = {0, ..., *N* - 1},
et **caractérisé par** :

- a. une étape de pré-calcul d'une table correspondant à ladite fonction univariée *f,* consistant à

  ∘ décomposer le domaine $\mathcal{D}$ en lesdits plusieurs intervalles, lesdits plusieurs intervalles étant *N* sous-

  intervalles choisis $R_0$, ..., $R_{N-1}$ dont l'union vaut $\mathcal{D}$

  ∘ pour chaque indice *i* dans $\mathcal{S}$ = {0, ... , *N* - 1}, calculer la valeur *y(i) = f(x(i))* pour le représentant *x(i)* dans le sous-intervalle $R_i$

  ∘ retourner la table *T* constituée des *N* composantes *T*[0], ..., *T*[*N* - 1], avec *T*[*i*] = *y(i)* pour $0 \leq i \leq N - 1$

- b. une étape d'évaluation homomorphe de la table consistant à

  ∘ convertir le chiffré *E*(encode(*x*)) en le chiffré $\varepsilon_H$(encode$_H$($\tilde{\iota}$)) pour un entier $\tilde{\iota}$ ayant pour valeur attendue l'indice i = (discretise ∘ encode)(*x*) dans l'ensemble $\mathcal{S}$ = {0, ... , *N* - 1} si $x \in R_i$

  ∘ obtenir le chiffré *E'*(encode'(*T*[$\tilde{\iota}$])˜) pour un élément encode'(*T*[$\tilde{\iota}$])˜ ayant pour valeur attendue encode'(*T*[*i*]), à partir du chiffré $\varepsilon_H$(encode$_H$($\tilde{\iota}$)) et de la table *T*

  ∘ retourner *E'*(encode'(*T*[$\tilde{\iota}$])˜).

**12.** Procédé cryptographique selon la revendication 11, **caractérisé en ce que**

- le domaine de définition de ladite au moins une fonction f à évaluer est donné par l'intervalle réel $\mathcal{D}$ = [$x_{min}$, $x_{max}$),
- les *N* intervalles $R_i$ (pour $0 \leq i \leq N - 1$) couvrant le domaine D sont les sous-intervalles semi-ouverts

$$R_i = \left[ \frac{i}{N}(x_{max} - x_{min}) + x_{min}, \frac{i+1}{N}(x_{max} - x_{min}) + x_{min} \right)$$ , découpant $\mathcal{D}$ de façon régulière.

**13.** Procédé cryptographique selon la revendication 11, **caractérisé en ce que** l'ensemble $\mathcal{S}$ est un sous-ensemble du

groupe additif $\mathbb{Z}_M$ pour un entier $M \geq N$.

**14.** Procédé cryptographique selon la revendication 13, **caractérisé en ce que** le groupe $\mathbb{Z}_M$ est représenté de façon multiplicative comme les puissances d'une racine primitive $M$-ième de l'unité notée $X$, de sorte qu'à l'élément i de $\mathbb{Z}_M$ est associé l'élément $X^i$; l'ensemble des racines M-ièmes de l'unité $\{1, X, \ldots, X^{M-1}\}$ formant un groupe isomorphe à $\mathbb{Z}_M$ pour la multiplication modulo $(X^M - 1)$.

**15.** Procédé cryptographique selon l'une des revendications 11 à 14, **caractérisé en ce que** l'algorithme de chiffrement homomorphe $E$ est donné par un algorithme de chiffrement de type LWE appliqué au tore $\mathbb{T} = \mathbb{R}/\mathbb{Z}$ et a pour espace natif des clairs $\mathcal{M} = \mathbb{T}$.

**16.** Procédé cryptographique selon la revendication 15, paramétré par un entier $M \geq N$ et **caractérisé en ce que**

- la fonction d'encodage encode a son image contenue dans le sous-intervalle $\left[0, \frac{N}{M} - \frac{1}{2M}\right)$ du tore, et
- la fonction de discrétisation discretise applique un élément t du tore à l'arrondi entier du produit $M \times t$ modulo $M$, où $M \times t$ est calculé dans $\mathbb{R}$ ; sous forme mathématique :

discretise : $\mathbb{T} \to \mathbb{Z}$, $t \mapsto \text{discretise}(t) = \lfloor M \times t \rceil \bmod M$.

**17.** Procédé cryptographique selon la revendication 16, **caractérisé en ce que** lorsque le domaine de définition de la fonction $f$ est l'intervalle réel $\mathcal{D} = [x_{\min}, x_{\max})$, la fonction d'encodage encode est
encode :

$$[x_{\min}, x_{\max}) \to \left[0, \frac{N}{M} - \frac{1}{2M}\right),$$

$$x \mapsto \text{encode}(x) = \frac{2N-1}{2M} \frac{x - x_{\min}}{x_{\max} - x_{\min}}.$$

**18.** Procédé cryptographique selon la revendication 15, **caractérisé en ce que** l'algorithme de chiffrement homomorphe $\varepsilon_H$ est un algorithme de chiffrement de type LWE et la fonction d'encodage encode$_H$ est la fonction identité.

**19.** Procédé cryptographique selon la revendication 15, paramétré par un entier $M$ pair et **caractérisé en ce que** l'algorithme de chiffrement homomorphe $\varepsilon_H$ est un algorithme de chiffrement de type RLWE et la fonction d'encodage encode$_H$ est la fonction encode$_H$ : $\mathbb{Z}_M \to \mathbb{T}_{M/2}[X]$, $i \mapsto \text{encode}_H(i) = X^{-i} \cdot p(X)$ pour un polynôme arbitraire $p$ de $\mathbb{T}_{M/2}[X]$.

**20.** Procédé cryptographique selon l'une des revendications 18 ou 19, paramétré par un entier $M$ pair égal à $2N$, et **caractérisé en ce qu'**un chiffré de type LWE $E'(\text{encode}'(T[\tilde{i}]))$ sur le tore est extrait d'un chiffré RLWE approchant le polynôme $X^{-\tilde{i}} \cdot q(X) \in \mathbb{T}_N[X]$ avec $q(X) = T'[0] + T'[1]X + \cdots + T'[N-1]X^{N-1} = \sum_{j=0}^{N-1} T'[j]X^j$ dans $\mathbb{T}_N[X]$ et où $T[j] = \text{encode}'(T[j])$, $0 \leq j \leq N - 1$.

**21.** Procédé cryptographique selon l'une des revendications 11 à 14, **caractérisé en ce que**, lorsque l'image de ladite au moins une fonction $f$ est l'intervalle réel $\mathcal{J} = [y_{\min}, y_{\max})$,

- l'algorithme de chiffrement homomorphe *E'* est donné par un algorithme de chiffrement de type LWE appliqué au tore $\mathbb{T} = \mathbb{R}/\mathbb{Z}$ et a pour espace natif des clairs $\mathcal{M}' = \mathbb{T}$,
- la fonction d'encodage encode' est
encode' :

$$[y_{\min}, y_{\max}) \to \mathbb{T}, \qquad y \mapsto \text{encode}'(y) = \frac{y - y_{\min}}{y_{\max} - y_{\min}}.$$

**22.** Procédé cryptographique selon l'une des revendications 1 à 21 **caractérisé en ce que** les données chiffrées en entrée sont issues d'une étape préalable de recryption pour être mises sous la forme de chiffrés d'encodés dudit algorithme de chiffrement homomorphe E.

**23.** Système de traitement de l'information **caractérisé en ce qu'**il est programmé pour mettre en œuvre un procédé cryptographique d'évaluation homomorphe selon l'une ou plusieurs des revendications 1 à 22.

**24.** Programme informatique destiné à être chargé et mis en œuvre par un système de traitement de l'information selon la revendication 23.

**25.** Service à distance de type *cloud computing* mettant en œuvre un procédé cryptographique selon une ou plusieurs des revendications 1 à 22 dans lequel les tâches sont partagées entre un détenteur des données et un ou des tiers agissant comme prestataires de traitement numérique.

**26.** Service à distance selon la revendication 25 faisant intervenir le détenteur des données $x_1, \ldots, x_p$ qu'il veut conserver secrètes et un ou plusieurs tiers ayant en charge l'application du traitement numérique sur lesdites données, **caractérisé en ce que**

- a. le ou les tiers concernés réalisent, selon la revendication 1, la première étape de pré-calcul de réseaux de fonctions univariées et la deuxième étape de pré-sélection
- b. à partir des données $x_1, \ldots, x_p$ détenues par le détenteur des données sont calculées des données de type $E(\mu_1), \ldots, E(\mu_p)$, où $E$ est un algorithme de chiffrement homomorphe et où $\mu_i$ est la valeur encodée de $x_i$ par une fonction d'encodage
- c. lorsque le tiers concerné a obtenu les données chiffrées de type $E(\mu_i)$, il évalue homomorphiquement en une série d'étapes successives à partir de ces chiffrés chacun desdits réseaux de fonctions univariées, de façon à obtenir les chiffrés d'encodés de $f_j$ appliquée à leurs entrées (pour $1 \le j \le q$) sous un algorithme de chiffrement
- d. une fois qu'il a obtenu, pour la ou les différentes fonctions $f_j$ concernées les résultats chiffrés des encodés sur leurs valeurs d'entrée, le tiers concerné renvoie au détenteur des données l'ensemble de ces résultats
- e. le détenteur des données obtient à partir de la clé de déchiffrement correspondante dont il dispose, après décodage, une valeur du résultat d'une ou plusieurs fonctions $(f_1, \ldots, f_q)$.

**27.** Service à distance selon la revendication 26 **caractérisé en ce que** dans la deuxième étape dénommée (b) dans ladite revendication le détenteur des données réalise le chiffrement de $x_1, \ldots, x_p$ par un algorithme $E$ de chiffrement homomorphe, et transmet au tiers des données de type $E(\mu_1), \ldots, E(\mu_p)$, où $\mu_i$ est la valeur encodée de $x_i$ par une fonction d'encodage

**28.** Service à distance selon la revendication 26 **caractérisé en ce que** dans la deuxième étape dénommée (b) dans ladite revendication

- le détenteur des données réalise le chiffrement de $x_1, \ldots, x_p$ par un algorithme de chiffrement différent de $E$ et, transmet lesdites données ainsi chiffrées
- sur lesdites données chiffrées reçues, le tiers concerné effectue une recryption pour obtenir les chiffrés $E(\mu_1), \ldots, E(\mu_p)$ sous ledit algorithme de chiffrement homomorphe $E$, où $\mu_i$ est la valeur encodée de $x_i$ par une fonction d'encodage.

**29.** Service à distance selon l'une des revendications 25 à 28 destiné à des traitements numériques mettant en œuvre des réseaux de neurones.

**Patentansprüche**

1. Ein kryptographisches Verfahren, das ausgeführt wird in numerischer Form durch mindestens ein Informationsverarbeitungssystem, das spezifisch dafür programmiert ist, die Bewertung einer oder mehrerer multivariater reellwertiger Funktionen $f_1, ..., f_g$ durchzuführen, wobei jede der Funktionen als Eingabe eine Vielzahl von reellen Variablen aus den Variablen $x_1, ..., x_p$ nimmt, und mindestens eine der Funktionen als Eingabe mindestens zwei Variablen nimmt,

   als Eingabe die Verschlüsselungen der Codierungen jede der Eingaben $x_i$, $E$(encode($x_i$)) mit $1 \leq i \leq p$ nimmt und die Vielzahl von Verschlüsselungen der Codierungen von $f_1, ..., f_q$, die an ihren jeweiligen Eingaben angewendet werden, ausgibt, wobei $E$ ein Algorithmus zur homomorphen Verschlüsselung ist und encode eine Codierungsfunktion ist, die jeden der reellen Werte $x_i$ mit einem Element eines nativen Klartextraums von $E$ assoziiert, **gekennzeichnet durch**:

   - a. einen Schritt der Vorabberechnung, der darin besteht, jede der multivariaten Funktionen in ein Netz von univariaten Funktionen zu transformieren, das aus Zusammensetzungen von univariaten reellwertigen Funktionen und Summen gebildet ist, wobei der Definitionsbereich einer zu bewertenden Funktion $f$ in mehrere Intervalle diskretisiert wird, die deren Definitionsbereich abdecken, wobei jedes Intervall durch einen Wert $x_i$ sowie durch einen entsprechenden Wert der Funktion $f(x_i)$ dargestellt wird, wobei die Funktion $f$ so durch eine Reihe von Paaren der Form $(x_i, f(x_i))$ tabelliert ist, wobei diese Paare verwendet werden, um eine Verschlüsselung von $f(x)$ oder einen angenäherten Wert ausgehend von einer Verschlüsselung von $x$ für einen beliebigen Wert $x$ im Definitionsbereich der Funktion homomorph zu berechnen,
   - b. einen Schritt der Vorabauswahl, der darin besteht, in den Netzen von vorab berechneten univariaten Funktionen Redundanzen eines der drei Typen zu identifizieren

     ○ gleiche univariate Funktionen, die an gleichen Argumenten angewendet werden,
     ○ unterschiedliche univariate Funktionen, die an gleichen Argumenten angewendet werden,
     ○ gleiche univariate Funktionen, die an Argumenten angewendet werden, die sich um eine additive Konstante ungleich Null unterscheiden,

   und wobei alle oder ein Teil ausgewählt wird,
   c. einen Schritt der homomorphen Bewertung jedes der Netze von vorab berechneten univariaten Funktionen, wobei, wenn alle oder ein Teil einer oder mehrerer dieser univariaten Funktionen wiederverwendet wird, die im Schritt der Vorabauswahl ausgewählten Redundanzen auf gebündelte Weise bewertet werden.

2. Das kryptographische Verfahren nach Anspruch 1, **dadurch gekennzeichnet, dass** für mindestens eine Funktion $f_j$ aus $f_1, ..., f_q$ die Transformation des Schritts der Vorabberechnung eine angenäherte Transformation der Form

   $$f_j(x_{j_1}, ..., x_{j_t}) \approx \sum_{k=0}^{K} g_k\left(\sum_{i=1}^{t} a_{i,k} x_{j_i}\right)$$ mit $t \leq p$ und $j_1, ...j_t \in \{1, ..., p\}$ ist, und wobei die Koeffizienten $a_{i,k}$

   reelle Zahlen sind, und wobei die $g_k$ univariate reellwertige Funktionen sind, wobei die Funktionen $g_k$ und die Koeffizienten $a_{i,k}$ für einen gegebenen Parameter $K$ in Abhängigkeit von $f_j$ definiert sind.

3. Das kryptographische Verfahren nach Anspruch 1, **dadurch gekennzeichnet, dass** für mindestens eine Funktion $f_j$ aus $f_1, ..., f_q$ die Transformation des Schritts der Vorabberechnung eine angenäherte Transformation der Form

   $$f_j(x_{j_1}, ..., x_{j_t}) \approx \sum_{k=0}^{K} g_k(\| \mathbf{x} - \mathbf{a_k} \|)$$ mit $\mathbf{x} = (x_{j_1}, ..., x_{j_t})$, $\mathbf{a_k} = (a_{1,k}, ..., a_{t,k})$, $t \leq p$ und $j_1, ...j_t \in \{1, ..., p\}$ ist und wobei die Vektoren $\mathbf{a_k}$ als Koeffizienten $a_{i,k}$ reelle Zahlen aufweisen, und wobei die $g_k$ univariate reellwertige Funktionen sind, wobei die Funktionen $g_k$ und die Koeffizienten $a_{i,k}$ für einen gegebenen Parameter K und eine gegebene Norm ||·|| in Abhängigkeit von $f_j$ definiert sind.

4. Das kryptographische Verfahren nach einem der Ansprüche 2 oder 3, **dadurch gekennzeichnet, dass** die Koeffizienten $a_{i,k}$ fest sind.

5. Das kryptographische Verfahren nach Anspruch 1, **dadurch gekennzeichnet, dass** für mindestens eine Funktion $fj$ aus $f_1, ..., f_q$ die Transformation des Schritts der Vorabberechnung eine angenäherte Transformation der Form

   $$f_j(x_{j_1}, ..., x_{j_t}) \approx \sum_{k=0}^{K} g_k\left(\sum_{i=1}^{t} \lambda_{j_i} \Psi(x_{j_i} + ka)\right)$$ mit $t \leq p$ und $j_1, ...j_t \in \{1, ..., p\}$ ist, und wobei $\Psi$ eine

   univariate reellwertige Funktion ist, wobei die $\lambda_{j_i}$ reelle Konstanten sind und wobei die $g_k$ univariate reellwertige

Funktionen sind, wobei die Funktionen $g_k$ für einen gegebenen Parameter $K$ in Abhängigkeit von $f_j$ definiert sind.

6. Das kryptographische Verfahren nach Anspruch 1, **dadurch gekennzeichnet, dass** die Transformation des Schritts der Vorabberechnung die formelle Äquivalenz $\max(z_1, z_2) = z_2 + (z_1 - z_2)^+$ zum Ausdrücken der Funktion von $(z_1, z_2) \mapsto \max(z_1, z_2)$ als eine Kombination von Summen und Zusammensetzungen von univariaten Funktionen verwendet.

7. Das kryptographische Verfahren nach Anspruch 1, **dadurch gekennzeichnet, dass** die Transformation des Schritts der Vorabberechnung die formelle Äquivalenz $\min(z_1, z_2) = z_2 + (z_1 - z_2)^-$ zum Ausdrücken der Funktion von $(z_1, z_2) \mapsto \min(z_1, z_2)$ als eine Kombination von Summen und Zusammensetzungen von univariaten Funktionen verwendet.

8. Das kryptographische Verfahren nach Anspruch 1, **dadurch gekennzeichnet, dass** die Transformation des Schritts der Vorabberechnung die formelle Äquivalenz $z_1 \times z_2 = (z_1 + z_2)^2/4 - (z_1 - z_2)^2/4$ zum Ausdrücken der Funktion $(z_1, z_2) \mapsto z_1 \times z_2$ als eine Kombination von Summen und Zusammensetzungen von univariaten Funktionen verwendet.

9. Das kryptographische Verfahren nach Anspruch 1, **dadurch gekennzeichnet, dass** die Transformation des Schritts der Vorabberechnung die formelle Äquivalenz $|z_1 \times z_2| = \exp(\ln|z_1| + \ln|z_2|)$ zum Ausdrücken der Funktion von $(z_1, z_2) \mapsto |z_1 \times z_2|$ als eine Kombination von Summen und Zusammensetzungen von univariaten Funktionen verwendet.

10. Das kryptographische Verfahren nach einem der Ansprüche 6 bis 9, **dadurch gekennzeichnet, dass** die formelle Äquivalenz ausgehend von der Iteration der formellen Äquivalenz für zwei Variablen für die Funktion erhalten wird, wenn diese drei oder mehr Variablen umfasst.

11. Das kryptographische Verfahren nach einem der Ansprüche 1 bis 10, umfassend einen Schritt der homomorphen Bewertung mindestens eines der Netze von vorab berechneten univariaten Funktionen, und ein Unterverfahren der angenäherten homomorphen Bewertung mindestens einer der univariaten Funktionen $f$ einer reellen Variable $x$ mit beliebiger Genauigkeit in einem Definitionsbereich $\mathcal{D}$ und mit reellem Wert in einem Bild $\mathcal{J}$, indem die Verschlüsselung einer Codierung von $x$, $E(\text{encode}(x))$, als Eingabe genommen wird und die Verschlüsselung einer Codierung eines angenäherten Werts von $f(x)$, $E'(\text{encode}'(y))$ mit $y \approx f(x)$, ausgegeben wird, wobei $E$ und $E'$ homomorphe Verschlüsselungsalgorithmen sind, deren jeweiliger nativer Klartextraum $\mathcal{M}$ und $\mathcal{M}'$ ist, wobei das Unterverfahren parametrisiert ist durch:

   - eine ganze Zahl $N \geq 1$, die die effektive Genauigkeit der Darstellung der Eingabevariablen der zu bewertenden Funktion $f$ quantifiziert,
   - eine Codierungsfunktion encode, die als Eingabe ein Element des Bereichs $D$ nimmt und diesem ein Element von $\mathcal{M}$ zuordnet;
   - eine Codierungsfunktion encode', die als Eingabe ein Element des Bildes $\mathcal{J}$ nimmt und diesem ein Element von $\mathcal{M}'$ zuordnet,
   - eine Diskretisierungsfunktion discretise, die als Eingabe ein Element von $M$ nimmt und diesem einen durch eine ganze Zahl dargestellten Index zuordnet,
   - ein homomorphes Verschlüsselungsschema, das einen Verschlüsselungsalgorithmus $\varepsilon_H$ besitzt, dessen nativer Klartextraum $\mathcal{M}_H$ eine Kardinalität von mindestens $N$ aufweist,
   - eine Codierungsfunktion $\text{encode}_H$, die als Eingabe eine ganze Zahl nimmt und ein Element von $\mathcal{M}_H$ ausgibt,

   sodass das Bereichsbild $\mathcal{D}$ durch die Codierung encode, gefolgt von der Diskretisierung discretise, (discretise ∘ encode)(D) eine Menge von höchstens $N$ Indizes aus $\mathcal{S} = \{0, ... , N - 1\}$ ist,
   und **gekennzeichnet durch**:

   - a. einen Schritt der Vorabberechnung einer Tabelle, die der univariaten Funktion $f$ entspricht, bestehend aus

     ∘ Zerlegen des Bereichs $\mathcal{D}$ in die mehreren Intervalle, wobei die mehreren Intervalle $N$ ausgewählte Teilintervalle $R_0, ..., R_{N-1}$ sind, deren Vereinigung $\mathcal{D}$ entspricht.
     für jeden Index $i$ in $\mathcal{S} = \{0, ... , N - 1\}$, Berechnen des Werts $y(i) = f(x(i))$ für den Stellvertreter $x(i)$ im

Teilintervall $R_i$

∘ Ausgeben der Tabelle $T$, die aus den $N$ Komponenten $T[0], ..., T[N - 1]$ gebildet ist, mit $T[i] = y(i)$ für $0 \leq i \leq N - 1$

- b. einen Schritt der homomorphen Bewertung der Tabelle, bestehend aus

∘ Konvertieren der Verschlüsselung $E(\text{encode}(x))$ in die Verschlüsselung $\varepsilon_H(\text{encode}_H(\widetilde{\iota}))$ für eine ganze Zahl $\widetilde{\iota}$, deren erwarteter Wert der Index $i = (\text{discretise} \circ \text{encode})(x)$ in der Menge $\mathcal{S} = \{0, ..., N - 1\}$ wenn $x \in R_i$ ist

∘ Erhalten der Verschlüsselung $E'(\text{encode}'(T[\widetilde{\iota}])^\sim)$ für ein Element $\text{encode}'(T[\widetilde{\iota}])^\sim$, dessen erwarteter Wert $\text{encode}'(T[\widetilde{\iota}])$ ist, ausgehend von der Verschlüsselung $\varepsilon_H(\text{encode}_H(\widetilde{\iota}))$ und der Tabelle $T$

∘ Ausgeben $E'$ von $(\text{encode}'(T[\widetilde{\iota}])^\sim)$.

**12.** Das kryptographische Verfahren nach Anspruch 11, **dadurch gekennzeichnet, dass**

- der Definitionsbereich der mindestens einen zu bewertenden Funktion $f$ durch das reelle Intervall $\mathcal{D} = [x_{min}, x_{max})$ gegeben ist,
- die $N$ Intervalle $R_i$ (für $0 \leq i \leq N - 1$), die den Bereich $D$ abdecken, die halboffenen Teilintervalle

$$R_i = [\frac{i}{N}(x_{max} - x_{min}) + x_{min}, \frac{i+1}{N}(x_{max} - x_{min}) + x_{min})$$ sind, die $\mathcal{D}$ auf regelmäßige Weise zerteilen.

**13.** Das kryptographische Verfahren nach Anspruch 11, **dadurch gekennzeichnet, dass** die Menge $\mathcal{S}$ eine Teilmenge der additiven Gruppe $\mathbb{Z}_M$ für eine ganze Zahl $M \geq N$ ist.

**14.** Das kryptographische Verfahren nach Anspruch 13, **dadurch gekennzeichnet, dass** die Gruppe $\mathbb{Z}_M$ auf multiplikative Weise als die Hochzahlen einer $M$-ten Primitivwurzel der als $X$ notierten Einheit dargestellt ist, sodass das Element $i$ von $\mathbb{Z}_M$ dem Element $X^i$ zugeordnet ist, wobei die Menge der $M$-ten Wurzeln der Einheit $\{1, X, ..., X^{M-1}\}$ eine zu $\mathbb{Z}_M$ isomorphe Gruppe für die Multiplikation modulo $(X^M - 1)$ bildet.

**15.** Das kryptographische Verfahren nach einem der Ansprüche 11 bis 14, **dadurch gekennzeichnet, dass** der homomorphe Verschlüsselungsalgorithmus $E$ durch einen Verschlüsselungsalgorithmus vom Typ LWE gegeben ist, der am Torus $\mathbb{T} = \mathbb{R}/\mathbb{Z}$ angewendet wird und als nativen Klartextraum $\mathcal{M} = \mathbb{T}$ aufweist.

**16.** Das kryptographische Verfahren nach Anspruch 15, parametrisiert durch eine ganze Zahl $M \geq N$ und **dadurch gekennzeichnet, dass**

- das Bild der Codierungsfunktion encode im Teilintervall $\left[0, \frac{N}{M} - \frac{1}{2M}\right)$ des Torus enthalten ist, und
- die Diskretisierungsfunktion discretise ein Element t des Torus auf die gerundete ganze Zahl des Produkts $M \times t$ modulo $M$ anwendet, wobei $M \times t$ in $\mathbb{R}$ unter der folgenden mathematischen Form berechnet wird:
discretise:

$$\mathbb{T} \to \mathbb{Z}, t \mapsto \text{discretise}(t) = \lceil M \times t \rfloor \bmod M.$$

**17.** Das kryptographische Verfahren nach Anspruch 16, **dadurch gekennzeichnet, dass**, wenn der Definitionsbereich der Funktion $f$ das reelle Intervall $\mathcal{D} = [x_{min}, x_{max})$ ist, die Codierungsfunktion Folgendes ist
encode:

$$[x_{min}, x_{max}) \rightarrow \left[0, \frac{N}{M} - \frac{1}{2M}\right),$$

$$x \mapsto \text{encode}(x) = \frac{2N-1}{2M} \frac{x-x_{min}}{x_{max}-x_{min}}.$$

18. Das kryptographische Verfahren nach Anspruch 15, **dadurch gekennzeichnet, dass** der homomorphe Verschlüsselungsalgorithmus $\varepsilon_H$ ein Verschlüsselungsalgorithmus vom Typ LWE ist und die Codierungsfunktion encode$_H$ die Identitätsfunktion ist.

19. Das kryptographische Verfahren nach Anspruch 15, parametrisiert durch eine ganze gerade Zahl *M* und **dadurch gekennzeichnet, dass** der homomorphe Verschlüsselungsalgorithmus $\varepsilon_H$ ein Verschlüsselungsalgorithmus vom Typ RLWE ist und die Codierungsfunktion encode$_H$ die Funktion encode$_H$:

$$\mathbb{Z}_M \rightarrow \mathbb{T}_{M/2}[X], i \mapsto \text{encode}_H(i) = X^{-i} \cdot p(X)$$ , für ein beliebiges Polynom *p* von $\mathbb{T}_{M/2}[X]$ ist.

20. Das kryptographische Verfahren nach einem der Ansprüche 18 oder 19, parametrisiert durch eine ganze gerade Zahl *M* gleich *2N* und **dadurch gekennzeichnet, dass** eine Verschlüsselung vom Typ LWE *E'*(encode' ($T[\tilde{\iota}]$)) am Torus aus einer Verschlüsselung RLWE extrahiert wird, die sich dem Polynom $X^{-\tilde{\iota}} \cdot q(X) \in \mathbb{T}_N[X]$ mit *q(X)* = *T'*[0] + $T'[1]X + \cdots + T'[N-1]X^{N-1} = \sum_{j-0}^{N-1} T'[j]X^j$ in $\mathbb{T}_N[X]$ annähert, und wobei *T'[j]* = encode' (*T[j]*), 0 ≤ *j* ≤ *N* - 1.

21. Das kryptographische Verfahren nach einem der Ansprüche 11 bis 14, **dadurch gekennzeichnet, dass**, wenn das Bild der mindestens einen Funktion *f* das reelle Intervall $\mathcal{J}$ = [*y*$_{min}$, *y*$_{max}$) ist

   - der homomorphe Verschlüsselungsalgorithmus *E'* durch einen Verschlüsselungsalgorithmus vom Typ LWE gegeben ist, der am Torus $\mathbb{T} = \mathbb{R}/\mathbb{Z}$ angewendet wird und als nativen Klartextraum $\mathcal{M}' = \mathbb{T}$ aufweist,
   - die Codierungsfunktion encode' Folgendes ist
   encode':

$$[y_{min}, y_{max}) \rightarrow \mathbb{T}, \ y \rightarrow \text{encode}'(y) = \frac{y-y_{min}}{y_{max}-y_{min}}.$$

22. Das kryptographische Verfahren nach einem der Ansprüche 1 bis 21, **dadurch gekennzeichnet, dass** die verschlüsselten Daten als Eingabe aus einem vorherigen Schritt der Wiederverschlüsselung stammen, um sie in die Form von Verschlüsselungen von Codierungen des homomorphen Verschlüsselungsalgorithmus *E* zu bringen.

23. Ein Informationsverarbeitungssystem, **dadurch gekennzeichnet, dass** es zum Einsatz eines kryptographischen Verfahrens einer homomorphen Bewertung nach einem oder mehreren der Ansprüche 1 bis 22 programmiert ist.

24. Ein Informatikprogramm, das dazu vorgesehen ist, von einem Informationsverarbeitungssystem nach Anspruch 23 geladen und eingesetzt zu werden.

25. Ein entfernter Dienst vom *Cloud-Berechnungstyp,* der ein kryptographisches Verfahren nach einem der mehreren der Ansprüche 1 bis 22 einsetzt, wobei die Aufgaben zwischen einem Datenbesitzer und einem oder mehreren Dritten, die als Anbieter numerischer Verarbeitung fungieren, aufgeteilt werden.

26. Der entfernte Dienst nach Anspruch 25, der den Besitzer der Daten *x*$_1$, ..., *x*$_p$, die er geheim halten möchte, und einen oder mehrere Dritte, die mit der Anwendung der numerischen Datenverarbeitung an den Daten beauftragt sind, einbezieht, **dadurch gekennzeichnet, dass**

   - a. der oder die betroffenen Dritten den ersten Schritt der Vorabberechnung von Netzen von univariaten Funktionen und den zweiten Schritt der Vorabauswahl durchführen,

- b. ausgehend von den Daten $x_1, ..., x_p$, die von dem Datenbesitzer gehalten werden, Daten vom Datentyp $E(\mu_1), ..., E(\mu_p)$ berechnet werden, wobei $E$ ein homomorpher Verschlüsselungsalgorithmus ist und wobei $\mu_i$ der durch eine Codierungsfunktion codierte Wert von $x_i$ ist

- c. wenn der betroffene Dritte die verschlüsselten Daten von Typ $E(\mu_i)$ erhalten hat, er ausgehend von diesen Verschlüsselungen jedes der Netze von univariaten Funktionen in einer Reihe von aufeinanderfolgenden Schritten derart homomorph bewertet, dass die Verschlüsselungen der Codierungen von $f_j$ erhalten werden, die an ihren Eingaben (für $1 \leq j \leq q$) unter einem Verschlüsselungsalgorithmus angewendet werden

- d. nachdem er für die betroffene Funktion oder die betroffenen unterschiedlichen Funktionen $f_j$ die verschlüsselten Ergebnisse der Codierungen über die Eingabewerte erhalten hat, der betroffene Dritte die Gesamtheit dieser Ergebnisse an den Datenbesitzer zurücksendet

- e. der Datenbesitzer ausgehend von dem entsprechenden Entschlüsselungsschlüssel, über den er verfügt, nach einer Decodierung einen Wert des Ergebnisses einer oder mehrerer Funktionen ($f_1, ..., f_q$) erhält.

**27.** Der entfernte Dienst nach Anspruch 26, **dadurch gekennzeichnet, dass** im zweiten, im Anspruch als (b) bezeichneten Schritt der Datenbesitzer die Verschlüsselung von $x_1, ..., x_p$ durch einen homomorphen Verschlüsselungsalgorithmus $E$ durchführt und Daten vom Typ $E(\mu_1), ..., E(\mu_p)$ an den Dritten überträgt, wobei $\mu_i$ der durch eine Codierungsfunktion verschlüsselte Wert von $x_i$ ist.

**28.** Der entfernte Dienst nach Anspruch 26, **dadurch gekennzeichnet, dass** im zweiten, im Anspruch als (b) bezeichneten Schritt

- der Datenbesitzer die Verschlüsselung $x_1, ..., x_p$ durch einen von $E$ unterschiedlichen Verschlüsselungsalgorithmus durchführt und die so verschlüsselten Daten überträgt
- der betroffene Dritte auf den empfangenen verschlüsselten Daten eine Wiederverschlüsselung unter dem homomorphen Verschlüsselungsalgorithmus $E$ durchführt, um die Verschlüsselungen $E(\mu_1), ..., E(\mu_p)$ zu erhalten, wobei $\mu_i$ der durch eine Codierungsfunktion codierte Wert von $x_i$ ist.

**29.** Der entfernte Dienst nach einem der Ansprüche 25 bis 28, der zur numerischen Verarbeitung unter Einsatz von neuronalen Netzen vorgesehen ist.

**Claims**

**1.** A cryptographic method executed in digital form by at least one system for processing information specifically programmed to perform the evaluation of one or more real-valued multivariate functions $f_1, ..., f_q$, each of the functions taking, at the entry, a plurality of real variables from among the variables $x_1, ..., x_p$, and at least one of said functions taking, at the entry, at least two variables,
taking, at the entry, the encrypted values of the encoded values of each of the inputs $x_i$, $E(encode(x_i))$ with $1 \leq i \leq p$, and returning the plurality of encrypted values of encoded values of $f_1, ..., f_q$ applied to their respective inputs, where $E$ is a homomorphic encryption algorithm and encode is an encoding function which associates with each of the real values $x_i$, an element of the native space of the cleartexts of $E$, **characterised by**:

- a. a precalculation step comprising transforming each of said multivariate functions in a network of univariate functions, comprising compositions of real-valued univariate functions and of sums, where the definition domain of a univariate function $f$ to be evaluated is discretised into several intervals covering its definition domain, each interval being represented by a value $x_i$ as well as by a corresponding value of the function $f(x_i)$, the function $f$ thus being tabulated by a series of pairs of the form $(x_i, f(x_i))$, these pairs being used to homomorphically calculate an encrypted value of $f(x)$, or an approximate value, from an encrypted value of $x$, for an arbitrary value of $x$ in the definition domain of the function,
- b. a pre-selection step comprising identifying in said networks of precalculated univariate functions, the redundancies of one of the three types:

  ◦ same univariate functions applied to the same arguments,
  ◦ different univariate functions applied to the same arguments,
  ◦ same univariate functions applied to arguments differing from a non-zero additive constant

and selecting all or some of them
- c. a step of homomorphically evaluating each of the networks of precalculated univariate functions, wherein all or some of one or more of these univariate functions is reused, the redundancies selected in the pre-selection step are evaluated in a pooled manner.

2. The cryptographic method according to claim 1, **characterised in that** for at least one function $f_j$ from among $f_1, ..., f_q$, the transformation of the precalculation step is an approximate transformation of the form $f_j(x_{j_1}, ..., x_{j_t}) \approx \sum_{k=0}^{K} g_k(\sum_{i=1}^{t} a_{i,k} x_{j_i})$ with $t \leq p$ and $j_1, ..., j_t$ E {1, ..., p}, and where the coefficients $a_{i,k}$ are real numbers and where the $g_k$ are univariate functions defined by real values and with a real value, said functions $g_k$ and said coefficients $a_{i,k}$ being determined as a function of $f_j$, for a given parameter $K$.

3. The cryptographic method according to claim 1, **characterised in that** for at least one function $f_j$ from among $f_1, ..., f_q$, the transformation of the precalculation step is an approximate transformation of the form $f_j(x_{j_1}, ..., x_{j_t}) \approx \sum_{k=0}^{K} g_k(\| \mathbf{x} - \mathbf{a_k} \|)$ with $\mathbf{x} = (x_{j_1}, ..., x_{j_t})$, $\mathbf{a_k} = (a_{1,k}, ..., a_{t,k})$, $t \leq p$ and $j_1, ..., j_t$ E {1, ..., p} and where the vectors $\mathbf{a_k}$ have for coefficients $a_{i,k}$ of the real numbers and where the $g_k$ are univariate functions defined on the real values and with a real value, said functions $g_k$ and said coefficients $a_{i,k}$ being determined as a function of $f_j$, for a given parameter $K$ and a given standard $\|\cdot\|$.

4. The cryptographic method according to any one of claims 2 or 3, **characterised in that** the coefficients $a_{i,k}$ are fixed.

5. The cryptographic method according to claim 1, **characterised in that** for at least one function $f_j$ from among $f_1, ..., f_q$, the transformation of the precalculation step is an approximate transformation of the form $f_j(x_{j_1}, ..., x_{j_t}) \approx \sum_{k=0}^{K} g_k(\sum_{i=1}^{t} \lambda_{j_i} \Psi(x_{j_i} + ka))$ with $t \leq p$ and $j_1, ..., j_t \in \{1, ..., p\}$, and where $\Psi$ is a univariate function defined on the real values and with a real value, where the $\lambda_{j_i}$ are real constants and where the $g_k$ are univariate functions defined on the real values and with a real value, said functions $g_k$ being determined as a function of $f_j$, for a given parameter $K$.

6. The cryptographic method according to claim 1, **characterised in that** the transformation of the precalculation step uses the formal equivalence $\max(z_1, z_2) = z_2 + (z_1 - z_2)^+$ to express the function $(z_1, z_2) \mapsto \max(z_1, z_2)$ as a combination of sums and compositions of univariate functions.

7. The cryptographic method according to claim 1, **characterised in that** the transformation of the precalculation step uses the formal equivalence $\min(z_1, z_2) = z_2 + (z_1 - z_2)^-$ to express the function $(z_1, z_2) \mapsto \min(z_1, z_2)$ as a combination of sums and compositions of univariate functions.

8. The cryptographic method according to claim 1, **characterised in that** the transformation of the precalculation step uses the formal equivalence $z_1 \times z_2 = (z_1 + z_2)^2/4 - (z_1 - z_2)^2/4$ to express the function $(z_1, z_2) \mapsto z_1 \times z_2$ as a combination of sums and compositions of univariate functions.

9. The cryptographic method according to claim 1, **characterised in that** the transformation of the precalculation step uses the formal equivalence $|z_1 \times z_2| = \exp(\ln|z_1| + \ln|z_2|)$ to express the function $(z_1, z_2) + |z_1 \times z_2|$ as a combination of sums and compositions of univariate functions.

10. The cryptographic method according to any one of claims 6 to 9, **characterised in that** the formal equivalence is obtained from the iteration of the formal equivalence for two variables, for said function when this comprises three variables or more.

11. The cryptographic method according to any one of claims 1 to 10, comprising, in the step of homomorphically evaluating at least one of the networks of precalculated univariate functions, a sub-method of approximately homomorphically evaluating at least one of said univariate functions $f$ of a real variable $x$ of arbitrary accuracy in

a definition domain $\mathcal{D}$ and with a real value in an image $\mathcal{J}$, taking, at the entry, the encrypted value of an encoded value of $x$, $E(\text{encode}(x))$, and returning the encrypted value of an encoded value of an approximate value of $f(x)$, $E'(\text{encode}'(y))$ with $y \approx f(x)$, where $E$ and $E'$ are homomorphic encryption algorithms, the respective native space of which of the cleartexts is $\mathcal{M}$ and $\mathcal{M}'$,

said sub-method being configured by:

- an integer $N \geq 1$ quantifying the actual accuracy of the representation of the variables at the entry of the function $f$ to be evaluated,

- an encode encoding function taking at the entry, an element of the domain $\mathcal{D}$ and associating an element of $\mathcal{M}$ with it,

- an encode' encoding function taking at the entry, an element of the image $\mathcal{J}$ and associating an element of $\mathcal{M}$' with it,

- a discretise discretisation function taking at the entry, an element of $\mathcal{M}$ and associating an index represented by an integer with it,
- a homomorphic encryption scheme having an encryption algorithm $\varepsilon_H$, the native space of which of the cleartexts $\mathcal{M}_H$ is of cardinality at least $N$,

- an encode$_H$ encoding function taking at the entry, an integer and returning an element of $\mathcal{M}_H$,

such that the image of the domain $\mathcal{D}$ by the encode encoding followed by the discretisation discretise, (discretise o encode) ( $\mathcal{D}$), that is a set of at most $N$ indices taken from among $S = \{0, ...,N - 1\}$,
and **characterised by**:

- a. a step of pre-calculating a table corresponding to said univariate function $f$, comprising

○ breaking down the domain $\mathcal{D}$ into said several intervals, said several intervals being $N$ chosen sub-intervals $R_0, ..., R_{N-1}$ the union of which equals $D$

○ for each index $i$ in $S = \{0, ... , N - 1\}$, calculating the value $y(i) = f(x(i))$ for the representative $x(i)$ in the sub-interval $R_i$

○ returning the table $T$ comprising $N$ components $T[0], ..., T[N - 1]$, with $T[i] = y(i)$ for $0 \leq i \leq N - 1$

- b. a step of homomorphically evaluating the table comprising

○ converting the encrypted value $E(\text{encode}(x))$ into the encrypted value $\varepsilon_H(\text{encode}_H(\tilde{\iota}))$ for an integer $\tilde{\iota}$ having, for the expected value, the index $i = (\text{discretise o encode})(x)$ in the set $S = \{0, ... , N - 1\}$ if $x \in R_i$

○ obtaining the encrypted value $E'(\text{encode}'(T[\tilde{\iota}])\tilde{~})$ for an element $\text{encode}'(T[\tilde{\iota}])\tilde{~}$ having, for the expected value $\text{encode}'(T[\tilde{\iota}])$, from the encrypted value $\varepsilon_H(\text{encode}_H(\tilde{\iota}))$ and from the table $T$

○ returning $E'(\text{encode}'(T[\tilde{\iota}])\tilde{~})$.

12. The cryptographic method according to claim 11, **characterised in that**

- the definition domain of said at least one the function $f$ to be evaluated is given by the real interval $D = [x_{min}, x_{max})$,
- the $N$ intervals $R_i$ (for $0 \leq i \leq N - 1$) covering the domain $D$ are the semi-open sub-intervals

$$R_i = [\frac{i}{N}(x_{max} - x_{min}) + x_{min}, \frac{i+1}{N}(x_{max} - x_{min}) + x_{min})$$ , partitioning $\mathcal{D}$ regularly.

13. The cryptographic method according to claim 11, **characterised in that** the set $S$ is a subset of the additive group $\mathbb{Z}_M$ for an integer $M \geq N$.

14. The cryptographic method according to claim 13, **characterised in that** the group $\mathbb{Z}_M$ is represented in a multiplicative manner, like the powers of a primitive $M$-th root of unity referenced $X$, such that to the element $i$ of $\mathbb{Z}_M$ the element $X^i$ is associated; the set of roots $M$-ths of the unit $\{1, X, ..., X^{M-1}\}$ forming a group isomorphic to $\mathbb{Z}_M$ under multiplication modulo ($X^M - 1$).

**15.** The cryptographic method according to any one of claims 11 to 14, **characterised in that** the homomorphic encryption algorithm $E$ is given by an encryption algorithm of LWE type applied to the torus $\mathbb{T} = \mathbb{R}/\mathbb{Z}$ and has, for the native space, cleartexts $\mathcal{M} = \mathbb{T}$.

**16.** The cryptographic method according to claim 15, configured by an integer $M \geq N$ and **characterised in that**

- the encode encoding function has its image contained in the sub-interval $\left[0, \frac{N}{M} - \frac{1}{2M}\right)$ of the torus, and

- the discretisation discretise function applies an element $t$ of the torus to the rounded integer of the product $M \times t$ module $M$, where $M \times t$ is calculated in $\mathbb{R}$; in mathematic form:
discretise:

$$\mathbb{T} \to \mathbb{Z}, t \mapsto \mathrm{discretise}(t) = \lfloor M \times t \rceil \bmod M.$$

**17.** The cryptographic method according to claim 16, **characterised in that** when the definition domain of the function $f$ is the real interval $\mathcal{D} = [x_{min}, x_{max})$, the encode encoding function is
encode:

$$[x_{min}, x_{max}) \to \left[0, \frac{N}{M} - \frac{1}{2M}\right),$$

$$x \mapsto \mathrm{encode}(x) = \frac{2N-1}{2M} \frac{x - x_{min}}{x_{max} - x_{min}}.$$

**18.** The cryptographic method according to claim 15, **characterised in that** the homomorphic encryption algorithm $\varepsilon_H$ is an encryption algorithm of LWE type and the $\mathrm{encode}_H$ encoding function is the identity function.

**19.** The cryptographic method according to claim 15, configured by an even integer $M$ and **characterised in that** the homomorphic encryption algorithm $\varepsilon_H$ is an encryption algorithm of RLWE type and the $\mathrm{encode}_H$ encoding function is the function $\mathrm{encode}_H \colon \mathbb{Z}_M \to \mathbb{T}_{M/2}[X]$, $i \mapsto \mathrm{encode}_H(i) = X^{-i} \cdot p(X)$, for an arbitrary polynomial $p$ of $\mathbb{T}_{M/2}[X]$.

**20.** The cryptographic method according to any one of claims 18 or 19, configured by an even integer $M$ equal to $2N$, and **characterised in that** an encrypted value of LWE type $E'(\mathrm{encode}')(T[\tilde{\iota}]))$ on the torus is extracted from an RLWE encrypted value approximating the polynomials $X^{-\tilde{\iota}} \cdot q(X) \in \mathbb{T}_N[X]$ with $q(X) = T'[0] + T'[1]X + \cdots + T'[N-1]X^{N-1} = \sum_{j-0}^{N-1} T'[j]X^j$ in $\mathbb{T}_N[X]$ and where $T'[j] = \mathrm{encode}'(T[j])$, $0 \leq j \leq N - 1$.

**21.** The cryptographic method according to any one of claims 11 to 14, **characterised in that**, when the image of said at least one function $f$ is the real interval $\mathcal{J} = [y_{min}, y_{max})$,

- the homomorphic encryption algorithm $E'$ is given by an encryption algorithm of LWE type applied to the torus $\mathbb{T} = \mathbb{R}/\mathbb{Z}$ and has, for the native space of the cleartexts $\mathcal{M}' = \mathbb{T}$,
- the encode' encoding function is
encode':

$$[y_{min}, y_{max}) \to \mathbb{T}, \quad y \to \mathrm{encode}'(y) = \frac{y - y_{min}}{y_{max} - y_{min}}.$$

22. The cryptographic method according to any one of claims 1 to 21, **characterised in that** the encrypted data at the entry come from a prior recryption step to be put in the form of encoded encrypted values of said homomorphic encryption algorithm *E.*

23. An information processing system, **characterised in that** it is programmed to implement a homomorphic evaluation cryptographic method according to one or more of claims 1 to 22.

24. A computer program intended to be loaded and implemented by an information processing system according to claim 23.

25. A remote *cloud computing* type service implementing a cryptographic method according to one or more of claims 1 to 22, wherein the tasks are shared between a data owner and one or more third parties acting as digital processing service providers.

26. The remote service according to claim 25, involving the data owner $x_1, ..., x_p$ that they want to keep secrets and one or more third parties having in charge the application of the digital processing on said data, **characterised in that**

- a. the third party(ies) in question carry out, according to claim 1, the first step of pre-calculating networks of univariate functions and the second pre-selection step
- b. data, from data $x_1, ..., x_p$ owned by the data owner, is calculated from data of the type $E(\mu_1), ..., E(\mu_p)$, where $E$ is a homomorphic encryption algorithm and where $\mu_i$ is the encoded value of $x_i$ by an encoding function
- c. when the third party in question has obtained the encrypted data of the type $E(\mu_i)$ it homomorphically evaluates in a series of successive steps from these encrypted values, each of said networks of univariate functions, so as to obtain the encrypted values of encoded values of $f_j$ applied to their entries (for $1 \leq j \leq q$) under an encryption algorithm
- d. once it has obtained, for the different function(s) $f_j$ in question, the encrypted results of the encoded values on their entry values, the third party in question returns to the owner, the data from all of these results
- e. the data owner obtains, from the corresponding encryption key that they have, after decoding, a value of the result of one or more functions $(f_1, ..., f_q)$.

27. The remote service according to claim 26, **characterised in that** in the second step called (b) in said claim, the data owner performs the encryption of $x_1, ..., x_p$ by a homomorphic encryption algorithm $E,$ and transmits to the third party, data of the type $E(\mu_i), ..., E(\mu_p)$, where $\mu_i$ is the encoded value of $x_i$ by an encoding function.

28. The remote service according to claim 26, **characterised in that** in the second step called (b) in said claim

- the data owner performs the encryption of $x_1, ..., x_p$ by an encryption algorithm different from $E$ and, transmits said data thus encrypted
- on said received encrypted data, the third party in question performs a recryption to obtain the encrypted values $E(\mu_1), ..., E(\mu_p)$ under said homomorphic encryption algorithm E, where $\mu_i$ is the encoded value of $x_i$ by an encoding function.

29. The remote service according to any one of claims 25 to 28, intended for digital processing implementing neural networks.

[FIGURE 1]

$(évaluation\ standard)$         $(évaluation\ optimisée)$

[FIGURE 2]

[FIGURE 3]

$$x \in R_i \subseteq \mathscr{D} \qquad i \in \mathcal{S} = \{0, \ldots, N-1\}$$

$$E(\mathtt{encode}(x))$$

$$\mathtt{encode} : \mathscr{D} \rightarrow \mathcal{M}$$

$$\mathcal{E}_H(\mathtt{encode}_H(\tilde{\imath}))$$

$$\mathtt{encode}_H : \mathbb{Z} \rightarrow \mathcal{M}_H$$
$$\mathtt{discretise} : \mathcal{M} \rightarrow \mathbb{Z}$$
$$\tilde{\imath} \text{ avec pour valeur attendue } i$$
$$i \leftarrow \mathtt{discretise}(\mathtt{encode}(x))$$

$$E'(\mathtt{encode}'(T[\tilde{\imath}])^\sim)$$

$$\mathtt{encode}' : \mathscr{I} \rightarrow \mathcal{M}'$$

$$\approx f(x) \in \mathscr{I}$$

$$\text{avec } f : \mathscr{D} \subseteq \mathbb{R} \rightarrow \mathscr{I} \subseteq \mathbb{R}, x \mapsto f(x)$$
$$\text{et } (\mathtt{discretise} \circ \mathtt{encode})(\mathscr{D}) \subseteq \mathcal{S}$$

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8630422 B2

**Littérature non-brevet citée dans la description**

- Fully homomorphic encryption using ideal lattices. **CRAIG GENTRY**. 41st Annual ACM Symposium on Theory of Computing. ACM Press, 2009, 169-178
- Fully homomorphic encryption over the integers. **MARTEN VAN DIJK** ; **CRAIG GENTRY** ; **SHAI HALEVI** ; **VINOD VAIKUNTANATHAN**. Advances in Cryptology - EUROCRYPT 2010. Springer, 2010, vol. 6110, 24-43
- Leveled) fully homomorphic encryption without bootstrapping. **ZVIKA BRAKERSKI** ; **CRAIG GENTRY** ; **VINOD VAIKUNTANATHAN**. ITCS 2012: 3rd Innovations in Theoretical Computer Science. ACM Press, 2012, 309-325
- Homomorphic encryption from learning with errors: Conceptually simpler, asymptotically faster, attribute-based. **CRAIG GENTRY** ; **AMIT SAHAI** ; **BRENT WATERS**. Advances in Cryptology - CRYPTO 2013. Springer, 2013, vol. 8042, 75-92
- FHEW: Bootstrapping homomorphic encryption in less than a second. **LÉO DUCAS** ; **DANIELE MICCIANCIO**. Advances in Cryptology - EUROCRYPT 2015. Springer, 2015, vol. 9056, 617-640
- Faster fully homomorphic encryption: Bootstrapping in less than 0.1 seconds. **ILARIA CHILLOTTI** ; **NICOLAS GAMA** ; **MARIYA GEORGIEVA** ; **MALIKA IZABACHÈNE**. Advances in Cryptology - ASIACRYPT 2016. Springer, 2016, vol. 10031, 3-33
- Fast homomorphic evaluation of deep discretized neural networks. **FLORIAN BOURSE** ; **MICHELE MINELLI** ; **MATTHIAS MINIHOLD** ; **PASCAL PAILLIER**. Advances in Cryptology - CRYPTO 2018. Springer, 2018, vol. 10993, 483-512
- New techniques for multi-value input homomorphic evaluation and applications. **SERGIU CARPOV** ; **MALIKA IZABACHÈNE** ; **VICTOR MOLLIMARD**. Topics in Cryptology - CT-RSA 2019. Springer, 2019, vol. 11405, 106-126

- Simulating homomorphic evaluation of deep learning predictions. **CHRISTINA BOURA** ; **NICOLAS GAMA** ; **MARIYA GEORGIEVA** ; **DIMITAR JETCHEV**. Cyber Security Cryptography and Machine Learning (CSCML 2019. Springer, 2019, vol. 11527, 212-230
- **ILARIA CHILLOTTI** ; **NICOLAS GAMA** ; **MARIYA GEORGIEVA** ; **MALIKA IZABACHÈNE**. TFHE: Fast fully homomorphic encryption over the torus. *Journal of Cryptology*, 2020, vol. 31 (1), 34-91
- **ANDREY N. KOLMOGOROV**. On the representation of continuous functions of several variables by superposition of continuous functions of one variable and addition. *Dokl. Akad. Nauk SSSR*, 1957, vol. 114, 953-956
- **DAVID A. SPRECHER**. On the structure of continuous functions of several variables. *Transactions of the American Mathematical Society*, 1965, vol. 115, 340-355
- Théorème de superposition de Kolmogorov et son application à la décomposition de fonctions multivariées. **PIERRE-EMMANUEL LENI** ; **YOHAN FOUGEROLLE** ; **FRÉDÉRIC TRUCHETET**. MajecSTIC '08, 29-31 octobre 2008. Marseille, 2008
- **B. F. LOGAN** ; **L. A. SHEPP**. Optimal reconstruction of a function from its projections. *Duke Mathematical Jounal*, 1975, vol. 42 (4), 645-659
- Approximating by ridge functions. **ALLAN PINKUS**. Surface Fitting and Multiresolution Methods,, 279-292
- **JEROME H. FRIEDMAN** ; **WERNER STUETZLE**. Projection pursuit regression. *Journal of the American Statistical Association*, 1981, vol. 76 (376), 817-823
- **D. S. BROOMHEAD** ; **DAVID LOWE**. Multivariable functional interpolation and adaptive networks. *Complex Systems*, 1988, vol. 2, 321-355
- On lattices, learning with errors, random linear codes, and cryptography. **ODED REGEV**. 37th Annual ACM Symposium on Theory of Computing. ACM Press, 2005, 84-93

- Efficient public key encryption based on ideal lattices. **DAMIEN STEHLÉ** ; **RON STEINFELD** ; **KEISUKE TANAKA** ; **KEITA XAGAWA**. Advances in Cryptology - ASIACRYPT 2009. Springer, 2009, vol. 5912, 617-635
- On ideal lattices and learning with errors over rings. **VADIM LYUBASHEVSKY** ; **CHRIS PEIKERT** ; **ODED REGEV**. Advances in Cryptology - EUROCRYPT 2010. Springer, 2010, vol. 6110, 1-23
- Homomorphic encryption: From private-key to public-key. **RON ROTHBLUM**. Theory of Cryptography (TCC 2011. Springer, 2011, vol. 6597, 219-234

- **DAVID A. SPRECHER**. A numerical implementation of Kolmogorov's superpositions. *Neural Networks*, 1996, vol. 9 (5), 765-772
- **DAVID A. SPRECHER**. A numerical implementation of Kolmogorov's superpositions II. *Neural Networks*, 1997, vol. 10 (3), 447-457
- **JÜRGEN BRAUN** ; **MICHAEL GRIEBEL**. On a constructive proof of Kolmogorov's superposition theorem. *Constructive Approximation*, 2007, vol. 30 (3), 653-675